# EUROPEAN PATENT APPLICATION

(11) **EP 4 819 677 A1**
(43) Date of publication of application: **07.10.2026**
(21) Application number: 24911070.1
(22) Date of filing: 23.12.2024
(51) Int. Cl.: H04W 24/08, H04W 52/04

(54) **METHOD AND APPARATUS FOR TRIGGERING POWER HEADROOM REPORTING, AND USER EQUIPMENT**

(30) Priority: 28.12.2023 CN 202311861738
(71) Applicant: Huawei Technologies Co., Ltd., Shenzhen, Guangdong 518129 (CN)
(72) Inventor: GAN, Linxiao, Shenzhen, Guangdong 518129 (CN); GONG, Mingxin, Shenzhen, Guangdong 518129 (CN); ZHANG, Xu, Shenzhen, Guangdong 518129 (CN)
(74) Representative: MERH-IP Matias Erny Reichl Hoffmann Patentanwälte PartG mbB
(86) International application number: PCT/CN2024/141618
(87) International publication number: WO 2025/140143

(57) **Abstract**

Embodiments of this application relate to the field of communication technologies, and provide a method and an apparatus for triggering power headroom reporting, and a terminal device. The method includes: A terminal device receives at least one first path loss offset value and at least one second path loss offset value, where the at least one first path loss offset value and the at least one second path loss offset value are from a network device. The terminal device performs power headroom reporting based on the at least one first path loss offset value and the at least one second path loss offset value. In this application, the terminal device obtains the at least one first path loss offset value and the at least one second path loss offset value that are sent by the network device, and determines, based on a variation between the two path loss offset values, whether to perform power headroom reporting. This resolves a problem in a UL-only TRP scenario that an existing trigger mechanism is inapplicable due to inconsistency between actual uplink path loss and measured downlink path loss.

## Description

This application claims priority to Chinese Patent Application No. 202311861738.2, filed with the China National Intellectual Property Administration on December 28, 2023 and entitled "METHOD AND APPARATUS FOR TRIGGERING POWER HEADROOM REPORTING, AND TERMINAL DEVICE", which is incorporated herein by reference in its entirety.

### TECHNICAL FIELD

This application relates to the field of communication technologies, and in particular, to a method and an apparatus for triggering power headroom reporting, and a terminal device.

### BACKGROUND

In a long term evolution (long term evolution, LTE) system and a new radio (new radio, NR) system, transmit power of a terminal device (user equipment, UE) cannot exceed maximum output power. Therefore, the UE usually notifies, through power headroom reporting (power headroom reporting, PHR), a network device of a difference between maximum output power of the UE and transmit power of a current physical uplink shared channel (physical uplink shared channel, PUSCH) or sounding reference signal (sounding reference signal, SRS). The network device performs uplink scheduling and link adaptation based on the difference, and further determines whether to perform power control, for example, reducing transmit power or increasing transmit power, so that the current transmit power of the UE falls within a proper range.

Currently, conditions for triggering the UE to perform PHR mainly include: expiration of a prohibit timer (phr-Prohibit Timer) expires and a path loss change since previous PHR being greater than a preset threshold; expiration of a periodic timer (phr-Periodic Timer); a change in PHR configuration; activation of a secondary cell (secondary cell, SCell); activation of a secondary cell group (secondary cell group, SCG); addition of a primary secondary cell (primary secondary cell, PSCell); or a power reduction caused by power control being greater than a preset threshold. When whether to trigger power headroom reporting is determined based on a status of the prohibit timer (phr-Prohibit Timer) and the path loss change since the previous PHR, in a conventional base station, uplink path loss and downlink path loss of the UE are equivalent. Therefore, the UE may obtain the uplink path loss by measuring a downlink reference signal, and then determine, depending on whether the prohibit timer (phr-Prohibit Timer) expires, whether to perform power headroom reporting. However, to increase an uplink throughput of a network, a base station used only for uplink reception (uplink-only TRP) is deployed. Although the uplink throughput is increased, downlink path loss measured by the UE is not equivalent to uplink path loss, and power headroom reporting cannot be triggered by measuring the downlink path loss.

### SUMMARY

This application provides a method and an apparatus for triggering power headroom reporting, and a terminal device. The terminal device determines, based on measured downlink path loss and a path loss offset value indicated by a network device, whether to perform power headroom reporting.

The technical solutions are as follows.

According to a first aspect, an embodiment of this application provides a method for triggering power headroom reporting, including: A terminal device receives at least one first path loss offset value and at least one second path loss offset value, where the at least one first path loss offset value and the at least one second path loss offset value are from a network device. The terminal device performs power headroom reporting based on the at least one first path loss offset value and the at least one second path loss offset value.

In this application, the terminal device obtains the at least one first path loss offset value and the at least one second path loss offset value that are sent by the network device, and performs power headroom reporting based on comparison between the two path loss offset values, to implement power headroom reporting in a UL only TRP scenario.

In a possible implementation, when the terminal device receives one second path loss offset value after receiving one first path loss offset value, the terminal device performs power headroom reporting based on the at least one first path loss offset value and the at least one second path loss offset value. The method provided in this embodiment of this application includes: The terminal device performs power headroom reporting when a variation between the first path loss offset value and the second path loss offset value is greater than or equal to a first preset threshold.

In a possible implementation, the method provided in this embodiment of this application further includes: The terminal device performs power headroom reporting when the variation between the first path loss offset value and the second path loss offset value is greater than or equal to the first preset threshold and the first path loss offset value has been used for power headroom reporting. That the first path loss offset value has been used for power headroom reporting may be that the first path loss offset value has been used for latest power headroom reporting or previous power headroom reporting. This is not limited in this embodiment of this application.

In a possible implementation, when the terminal device receives the at least one second path loss offset value after receiving one first path loss offset value, the terminal device performs power headroom reporting based on the at least one first path loss offset value and the at least one second path loss offset value. The method provided in this embodiment of this application includes: The terminal device determines a third path loss offset value based on the first path loss offset value and the at least one second path loss offset value. The terminal device performs power headroom reporting when a variation between the first path loss offset value and the third path loss offset value is greater than or equal to a second preset threshold.

In a possible implementation, the method provided in this embodiment of this application further includes: The terminal device performs power headroom reporting when the variation between the first path loss offset value and the third path loss offset value is greater than or equal to the first preset threshold and the first path loss offset value has been used for power headroom reporting. That the first path loss offset value has been used for power headroom reporting may be that the first path loss offset value has been used for latest power headroom reporting or has been used for previous power headroom reporting. This is not limited in this embodiment of this application.

In a possible implementation, when the terminal device receives a plurality of second path loss offset values after receiving a plurality of first path loss offset values, the terminal device performs power headroom reporting based on the at least one first path loss offset value and the at least one second path loss offset value. The method provided in this embodiment of this application includes: The terminal device determines a fourth path loss offset value based on the plurality of first path loss offset values. The terminal device determines a fifth path loss offset value based on the plurality of second path loss offset values. The terminal device performs power headroom reporting when a variation between the fourth path loss offset value and the fifth path loss offset value is greater than or equal to a third preset threshold.

In a possible implementation, the method provided in this embodiment of this application further includes: The terminal device performs power headroom reporting when the variation between the fourth path loss offset value and the fifth path loss offset value is greater than or equal to the first preset threshold and the first path loss offset value has been used for power headroom reporting. That the first path loss offset value has been used for power headroom reporting may be that the first path loss offset value has been used for latest power headroom reporting or has been used for previous power headroom reporting. This is not limited in this embodiment of this application.

In a possible implementation, the method provided in this embodiment of this application includes: The terminal device performs power headroom reporting based on the at least one first path loss offset value, the at least one second path loss offset value, and a status of a counter.

In a possible implementation, the method provided in this embodiment of this application includes: The terminal device performs power headroom reporting when the variation between the first path loss offset value and the second path loss offset value is greater than or equal to the first preset threshold, or the variation between the first path loss offset value and the third path loss offset value is greater than or equal to the second preset threshold, or the variation between the fourth path loss offset value and the fifth path loss offset value is greater than or equal to the third preset threshold, and the timer is in an expired state. In this way, the terminal device can trigger power headroom reporting based on the path loss offset values and the status of the timer.

In a possible implementation, the method provided in this embodiment of this application further includes: The terminal device performs power headroom reporting when the variation between the first path loss offset value and the second path loss offset value is greater than or equal to the first preset threshold, the timer is in the expired state, and the first path loss offset value has been used for power headroom reporting.

In a possible implementation, the method provided in this embodiment of this application further includes: The terminal device performs power headroom reporting when the variation between the first path loss offset value and the third path loss offset value is greater than or equal to the first preset threshold, the timer is in the expired state, and the first path loss offset value has been used for power headroom reporting.

In a possible implementation, the method provided in this embodiment of this application further includes: The terminal device performs power headroom reporting when the variation between the fourth path loss offset value and the fifth path loss offset value is greater than or equal to the first preset threshold, the timer is in the expired state, and the first path loss offset value has been used for power headroom reporting.

That the first path loss offset value has been used for power headroom reporting may be that the first path loss offset value has been used for latest power headroom reporting or has been used for previous power headroom reporting. This is not limited in this embodiment of this application.

That the timer is in the expired state may be understood as that the timer times out or has timed out, or the timer expires. This is not limited in this embodiment of this application.

In a possible implementation, the terminal device performs power headroom reporting based on the at least one first path loss offset value and the at least one second path loss offset value. The method provided in this embodiment of this application includes: The terminal device determines first uplink path loss and second uplink path loss, where the first uplink path loss is determined based on first downlink path loss and the at least one first path loss offset value, and the second uplink path loss is determined based on second downlink path loss and the at least one second path loss offset value, or is determined based on the at least one first path loss offset value, the second downlink path loss, and the at least one second path loss offset value. The terminal device performs power headroom reporting based on the first uplink path loss and the second uplink path loss.

In this application, the terminal device separately obtains the at least one first path loss offset value and the at least one second path loss offset value that are sent by the network device, and directly performs power headroom reporting based on a variation between the at least one first path loss offset value and the at least one second path loss offset value. When the variation is greater than or equal to a preset threshold, the terminal device triggers power headroom reporting.

In a possible implementation, that the terminal device performs power headroom reporting based on the first uplink path loss and the second uplink path loss includes: The terminal device performs power headroom reporting when a variation between the first uplink path loss and the second uplink path loss is greater than or equal to a fourth preset threshold.

In a possible implementation, the method provided in this embodiment of this application further includes: The terminal device performs power headroom reporting when the variation between the first uplink path loss and the second uplink path loss is greater than or equal to the fourth preset threshold and the first uplink path loss has been used for power headroom reporting. That the first uplink path loss has been used for power headroom reporting may be that the first uplink path loss has been used for latest power headroom reporting or previous power headroom reporting. This is not limited in this embodiment of this application.

In a possible implementation, the at least one first path loss offset value is received in a first time period, and the at least one second path loss offset value is received in a second time period, where the first time period is before the second time period.

In a possible implementation, first downlink path loss is obtained at a last time or within first preset time before the first time period; or first downlink path loss is obtained at a most recent time or within second preset time after the first time period.

In a possible implementation, second downlink path loss is obtained at a last time or within first preset time before the second time period; or second downlink path loss is obtained at a most recent time or within second preset time after the second time period.

In a possible implementation, when the terminal device does not receive the at least one second path loss offset value from the network device after receiving the at least one first path loss offset value, the second uplink path loss is determined based on the first downlink path loss and the at least one first path loss offset value.

In an example, after receiving the at least one first path loss offset value from the network device, the terminal device may not receive the at least one second path loss offset value. For example, the network device sends the at least one first path loss offset value to the terminal device at a first moment, and correspondingly, the terminal device receives the at least one first path loss offset value from the network device at the first moment; and the network device does not send the at least one second path loss offset value to the terminal device in a timely manner at a second moment, and correspondingly, the terminal device does not receive the at least one second path loss offset value at the second moment.

In a possible implementation, when the terminal device does not receive the at least one second path loss offset value from the network device after receiving the at least one first path loss offset value, the terminal device does not perform power headroom reporting.

In a possible implementation, the method provided in this embodiment of this application further includes: The terminal device performs power headroom reporting based on a status of a timer and a variation between the first uplink path loss and the second uplink path loss.

In a possible implementation, the method provided in this embodiment of this application includes: The terminal device performs power headroom reporting when the variation between the first uplink path loss and the second uplink path loss is greater than or equal to a fourth preset threshold and the timer is in an expired state.

In a possible implementation, the method provided in this embodiment of this application further includes: The terminal device performs power headroom reporting when the variation between the first uplink path loss and the second uplink path loss is greater than or equal to the fourth preset threshold, the timer is in the expired state, and the first uplink path loss has been used for power headroom reporting. That the first uplink path loss has been used for power headroom reporting may be that the first uplink path loss has been used for latest power headroom reporting or has been used for previous power headroom reporting. This is not limited in this embodiment of this application.

In a possible implementation, when the terminal device does not receive the at least one second path loss offset value from the network device after receiving the at least one first path loss offset value, the method provided in this embodiment of this application includes: The terminal device performs power headroom reporting based on the status of the timer and a variation between the first downlink path loss and the second downlink path loss.

In an example, at a first moment, the terminal device receives the at least one first path loss offset value from the network device and measures the first downlink path loss; and at a second moment, the terminal device measures the second downlink path loss but does not receive the at least one second path loss offset value from the network device. In this case, the terminal device determines, based on the first downlink path loss, the second downlink path loss, and the status of the timer, whether to perform power headroom reporting.

In a possible implementation, the method provided in this embodiment of this application includes: The terminal device performs power headroom reporting when the variation between the first downlink path loss and the second downlink path loss is greater than or equal to a fifth preset threshold and the timer is in the expired state.

In a possible implementation, the method provided in this embodiment of this application further includes: The terminal device performs power headroom reporting when the variation between the first downlink path loss and the second downlink path loss is greater than or equal to the fifth preset threshold, the timer is in the expired state, and the first downlink path loss has been used for power headroom reporting. That the first downlink path loss has been used for power headroom reporting may be that the first downlink path loss has been used for latest power headroom reporting or has been used for previous power headroom reporting. This is not limited in this embodiment of this application.

In a possible implementation, the first path loss offset value is a difference or an offset coefficient between the first downlink path loss and the first uplink path loss, and the second path loss offset value is a difference or an offset coefficient between the second downlink path loss and the second uplink path loss.

According to a second aspect, an embodiment of this application provides a method for triggering power headroom reporting, including: A network device sends at least one first path loss offset value and at least one second path loss offset value to a terminal device, where the at least one first path loss offset value and the at least one second path loss offset value are used to trigger power headroom reporting.

In a possible implementation, the method provided in this embodiment of this application includes: The network device sends one second path loss offset value to the terminal device after sending one first path loss offset value, and triggers the power headroom reporting when a variation between the first path loss offset value and the second path loss offset value is greater than or equal to a first preset threshold.

In a possible implementation, the method provided in this embodiment of this application includes: The network device receives the at least one second path loss offset value after sending one first path loss offset value to the terminal device, where the first path loss offset value and the at least one second path loss offset value are used to determine a third path loss offset value. The network device triggers the power headroom reporting when a variation between the first path loss offset value and the third path loss offset value is greater than or equal to a second preset threshold.

In a possible implementation, the method provided in this embodiment of this application includes: The network device sends the at least one second path loss offset value to the terminal device after sending the at least one first path loss offset value, where the at least one first path loss offset value is used to determine a fourth path loss offset value, and the at least one second path loss offset value is used to determine a fifth path loss offset value. The network device triggers the power headroom reporting when a variation between the fourth path loss offset value and the fifth path loss offset value is greater than or equal to a third preset threshold.

According to a third aspect, an embodiment of this application provides an apparatus for triggering power headroom reporting, including a receiving unit and a reporting unit. The receiving unit is configured to receive at least one first path loss offset value and at least one second path loss offset value, where the at least one first path loss offset value and the at least one second path loss offset value are from a network device. The reporting unit is configured to perform power headroom reporting based on the at least one first path loss offset value and the at least one second path loss offset value.

In a possible implementation, when one second path loss offset value is received after one first path loss offset value is received, the reporting unit is configured to perform power headroom reporting when a variation between the first path loss offset value and the second path loss offset value is greater than or equal to a first preset threshold.

In a possible implementation, when the at least one second path loss offset value is received after one first path loss offset value is received, the reporting unit is configured to determine a third path loss offset value based on the first path loss offset value and the at least one second path loss offset value. The reporting unit is further configured to perform power headroom reporting when a variation between the first path loss offset value and the third path loss offset value is greater than or equal to a second preset threshold.

In a possible implementation, when a plurality of second path loss offset values are received after a plurality of first path loss offset values are received, the reporting unit is configured to determine a fourth path loss offset value based on the plurality of first path loss offset values, and determine a fifth path loss offset value based on the plurality of second path loss offset values. The reporting unit is further configured to perform power headroom reporting when a variation between the fourth path loss offset value and the fifth path loss offset value is greater than or equal to a third preset threshold.

In a possible implementation, the reporting unit is configured to perform power headroom reporting based on the at least one first path loss offset value, the at least one second path loss offset value, and a status of a counter.

In a possible implementation, the reporting unit is configured to perform power headroom reporting when the variation between the first path loss offset value and the second path loss offset value is greater than or equal to the first preset threshold, or the variation between the first path loss offset value and the third path loss offset value is greater than or equal to the second preset threshold, or the variation between the fourth path loss offset value and the fifth path loss offset value is greater than or equal to the third preset threshold, and the timer is in an expired state.

In a possible implementation, the reporting unit is further configured to determine first uplink path loss and second uplink path loss, where the first uplink path loss is determined based on first downlink path loss and the first path loss offset value, and the second uplink path loss is determined based on second downlink path loss and the second path loss offset value, or is determined based on the first path loss offset value, the second downlink path loss, and the second path loss offset value. The reporting unit is further configured to perform power headroom reporting based on the first uplink path loss and the second uplink path loss.

In a possible implementation, the reporting unit is configured to perform power headroom reporting when a variation between the first uplink path loss and the second uplink path loss is greater than a fourth preset threshold.

In a possible implementation, the first path loss offset value is received in a first time period, and the second path loss offset value is received in a second time period, where the first time period is before the second time period.

In a possible implementation, when no second path loss offset value is received from the network device after the first path loss offset value is received, the reporting unit does not perform power headroom reporting.

In a possible implementation, the reporting unit is further configured to perform power headroom reporting based on a status of a timer and a variation between the first uplink path loss and the second uplink path loss.

In a possible implementation, the reporting unit is configured to perform power headroom reporting when the variation between the first uplink path loss and the second uplink path loss is greater than a first preset threshold and the timer is in an expired state.

In a possible implementation, when the at least one second path loss offset value is not received from the network device after the at least one first path loss offset value is received, the reporting unit is configured to perform power headroom reporting based on the status of the timer and a variation between the first downlink path loss and the second downlink path loss.

In a possible implementation, the reporting unit is configured to perform power headroom reporting when the variation between the first downlink path loss and the second downlink path loss is greater than a second preset threshold and the timer is in the expired state.

According to a fourth aspect, an embodiment of this application provides an apparatus for triggering power headroom reporting, including a sending unit, configured to send at least one first path loss offset value and at least one second path loss offset value.

In a possible implementation, the sending unit sends one second path loss offset value after sending one first path loss offset value, where power headroom reporting is triggered when a variation between the first path loss offset value and the second path loss offset value is greater than or equal to a first preset threshold.

In a possible implementation, the sending unit receives the at least one second path loss offset value after sending one first path loss offset value, where the first path loss offset value and the at least one second path loss offset value are used to determine a third path loss offset value, and power headroom reporting is triggered when a variation between the first path loss offset value and the third path loss offset value is greater than or equal to a second preset threshold.

In a possible implementation, the sending unit sends the at least one second path loss offset value after sending the at least one first path loss offset value, where the at least one first path loss offset value is used to determine a fourth path loss offset value, the at least one second path loss offset value is used to determine a fifth path loss offset value, and power headroom reporting is triggered when a variation between the fourth path loss offset value and the fifth path loss offset value is greater than or equal to a third preset threshold.

According to a fifth aspect, an embodiment of this application provides a communication apparatus. The communication apparatus includes a memory and a processor. The memory is configured to store instructions. The processor is configured to execute the instructions stored in the memory, and the execution of the instructions stored in the memory enables the processor to perform the method for triggering power headroom reporting according to the first aspect or the possible implementations of the first aspect, or perform the method for triggering power headroom reporting according to the first aspect or the possible implementations of the first aspect.

According to a sixth aspect, an embodiment of this application provides a computer-readable storage medium. The computer-readable storage medium stores a computer program or instructions. When the computer program or the instructions run on a computer, the computer is enabled to perform the method for triggering power headroom reporting according to the first aspect or the possible implementations of the first aspect, or perform the method for triggering power headroom reporting according to the first aspect or the possible implementations of the first aspect.

According to a seventh aspect, an embodiment of this application provides a computer program product including instructions. When the instructions run on a computer, the computer is enabled to perform the method for triggering power headroom reporting according to the first aspect or the possible implementations of the first aspect, or perform the method for triggering power headroom reporting according to the first aspect or the possible implementations of the first aspect.

According to an eighth aspect, an embodiment of this application provides a chip. The chip includes a processor and a communication interface. The communication interface is coupled to the processor. The processor is configured to run a computer program or instructions, to implement the method for triggering power headroom reporting according to the first aspect or the possible implementations of the first aspect, or perform the method for triggering power headroom reporting according to the first aspect or the possible implementations of the first aspect. The communication interface is configured to communicate with another module outside the chip.

Specifically, the chip provided in this embodiment of this application further includes a memory, configured to store the computer program or the instructions.

Any apparatus, computer storage medium, computer program product, chip, or communication system provided above is configured to perform a corresponding method provided above. Therefore, for beneficial effects that can be achieved, refer to beneficial effects of a corresponding solution in the corresponding method provided above. Details are not described herein again.

### BRIEF DESCRIPTION OF DRAWINGS

FIG. 1 is a diagram of a communication system according to an embodiment of this application;
FIG. 2 is a diagram of a method for triggering power headroom reporting according to an embodiment of this application;
FIG. 3 is a diagram of a method for triggering power headroom reporting according to an embodiment of this application;
FIG. 4 is a diagram of another method for triggering power headroom reporting according to an embodiment of this application;
FIG. 5 is a diagram of a structure of an apparatus for triggering power headroom reporting according to an embodiment of this application;
FIG. 6 is a diagram of a hardware structure of a communication apparatus according to an embodiment of this application;
FIG. 7 is a block diagram of a terminal device according to an embodiment of this application;
FIG. 8 is a block diagram of a network device according to an embodiment of this application; and
FIG. 9 is a diagram of a structure of a chip according to an embodiment of this application.

### DESCRIPTION OF EMBODIMENTS

To clearly describe the technical solutions in embodiments of this application, the terms "first", "second", and the like are used in embodiments of this application to distinguish between same items or similar items that provide basically same functions or purposes. For example, a first symbol and a second symbol are merely intended to distinguish between different symbols, but not to limit a sequence of the symbols. A person skilled in the art can understand that the terms "first", "second", and the like do not limit a quantity or an execution sequence, and the terms "first", "second", and the like do not indicate a definite difference.

It should be noted that, in this application, the term "in an example", "for example", or the like is used to give an example, an illustration, or a description. Any embodiment or design scheme described with "in an example" or "for example" in this application should not be construed as being more preferred or advantageous than another embodiment or design scheme. To be precise, the term "in an example", "for example", or the like is intended to present a related concept in a specific manner.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular form or a plural form.

Technical terms in embodiments of this application are described.
1. A power headroom is remaining power obtained after a terminal device completes current transmission. A network device may configure maximum permissible transmit power for the terminal device. In this case, the power headroom may be understood as remaining power obtained by subtracting actual transmit power from the maximum permissible transmit power, or remaining power obtained by subtracting reference transmit power from the maximum permissible transmit power. For example, transmit power at which the terminal device sends a physical uplink control channel (physical uplink shared channel, PUSCH) or a sounding reference signal (sounding reference signal, SRS) is P1, and the maximum permissible transmit power configured by the network device for the terminal device is P0. In this case, the power headroom may be understood as P0-P1.
2. Maximum transmit power indicates an upper limit of transmit power that can be used by a terminal device on a frequency band. Maximum transmit power of a terminal device is determined based on a capability and a frequency band of the terminal device.
3. Path loss is loss of a signal transmitted in space.

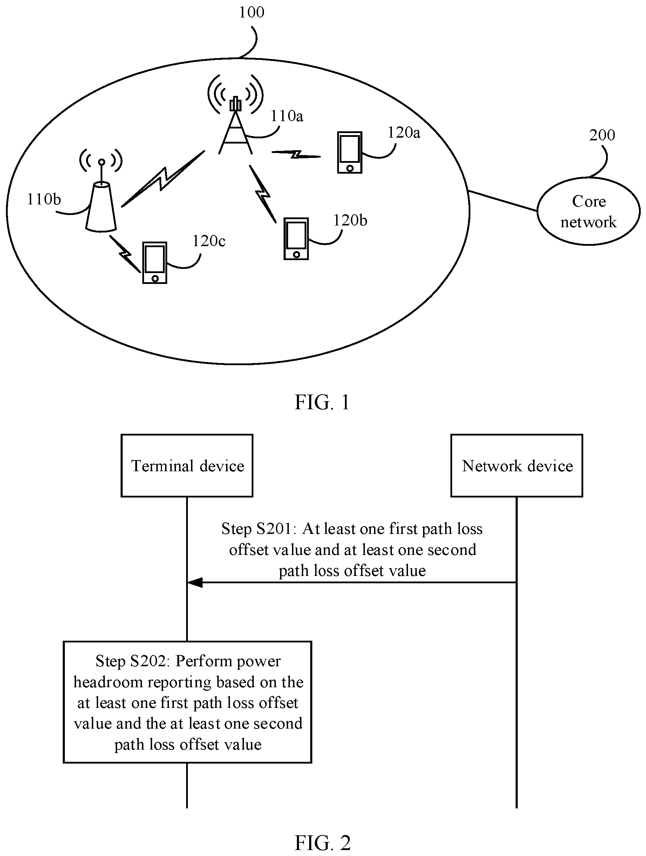

FIG. 1 is a diagram of an architecture of a communication system to which embodiments of this application are applied. As shown in FIG. 1, the communication system includes a radio access network 100 and a core network 200. The radio access network 100 may include at least one network device (for example, 110a and/or 110b in FIG. 1), and may further include at least one terminal device (for example, at least one of 120a to 120c in FIG. 1). The terminal device is connected to the network device in a wireless manner, and the network device is connected to the core network in a wireless or wired manner. Terminal devices may be connected to each other in a wired or wireless manner, and network devices may be connected to each other in a wired or wireless manner. FIG. 1 is merely a diagram. The communication system may further include other network devices, for example, may further include a wireless relay device and a wireless backhaul device.

The network device is a network-side device with a wireless transceiver function. The network device may be an apparatus that is in the radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, an access node in a Wi-Fi system, or the like; or may be a module or a unit for performing some functions of a base station, for example, a central unit (central unit, CU) or a distributed unit (distributed unit, DU). The CU herein performs functions of a radio resource control protocol and a packet data convergence protocol (packet data convergence protocol, PDCP) of the base station, and may further perform a function of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The network device may be a macro base station, or may be a micro base station or an indoor base station, or may be a relay node, a donor node, or the like. A specific technology and a specific device form that are used by the network device are not limited in embodiments of this application.

The terminal device is a user-side device with a wireless transceiver function. The terminal device may also be referred to as user equipment (user equipment, UE), a mobile station, a mobile terminal, or the like. The terminal apparatus may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific apparatus form that are used by the terminal device are not limited in embodiments of this application.

The network device and the terminal device may be at fixed locations, or may be movable. The network device and the terminal device may be deployed on land, including being deployed indoors or outdoors, or in a handheld or vehicle-mounted manner; or may be deployed on water; or may be deployed on an airplane, a balloon, and an artificial satellite in the air. Application scenarios of the network device and the terminal device are not limited in embodiments of this application.

Roles of the network device and the terminal device may be defined relative to each other. For example, the terminal device 120a in FIG. 1 may be configured as a mobile network device. For a terminal device that accesses the radio access network 100 through the terminal device 120a, the terminal device is a network device. However, for the network device 110a in FIG. 1, the terminal device 120a is a terminal device. To be specific, the network device 110a and the terminal device 120a communicate with each other through a radio air interface protocol. Certainly, the network device 110a and the terminal device 120a may alternatively communicate with each other through an interface protocol between network devices. In this case, the terminal device 120a is also a network device relative to the network device 110a. Therefore, the network device and the terminal device may be collectively referred to as communication apparatuses. The network device 110a and the network device 110b in FIG. 1 may be referred to as communication apparatuses with a function of a network device, and 120a to 120c in FIG. 1 may be referred to as communication apparatuses with a function of a terminal device.

Communication may be performed between the network device and the terminal device, between network devices, or between terminal devices by using a licensed spectrum, an unlicensed spectrum, or both a licensed spectrum and an unlicensed spectrum; and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the network device may alternatively be performed by a module (for example, a chip) in the network device, or may be performed by a control subsystem including the function of the network device. The control subsystem including the function of the network device herein may be a control center in the foregoing application scenarios, such as the smart grid, the industrial control, the smart transportation, and the smart city. A function of the terminal device may alternatively be performed by a module (for example, a chip or a modem) in the terminal device, or may be performed by an apparatus including the function of the terminal device.

Currently, when a terminal device meets a power headroom reporting (power headroom reporting, PHR) trigger condition, the terminal device may perform PHR to a network device, and reported content is a difference between maximum permissible transmit power and actual transmit power. A mechanism of PHR performed by the terminal device for a physical uplink shared channel (physical uplink shared channel, PUSCH) is used below as an example for description.

If the terminal device transmits uplink data, that is, a PUSCH, on an uplink bandwidth part (bandwidth part, BWP) b of a carrier *f* of a cell *c* by using a parameter set configuration with an index j and a PUSCH power control and adjustment state with an index *l,* transmit power of the PUSCH on a transmission occasion *i* is as follows: ${P}_{PUSCH , b , f , c} \left(i, j, {q}_{d}, l\right) = min \left\{\begin{matrix}{P}_{CMAX , f , c} \left(i\right) , \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\}$

The transmit power *P_{PUSCH,b,f,c}*(*i, j, q_{d}, l*) is measured in decibel (dBm).

*P_{CMAX,f,c}*(*i*) is maximum transmit power configured for the terminal device. *P_{O_PUSCH,b,f,c}*(*j*) is expected receive power configured by the network device for the terminal device. *µ* is a subcarrier spacing. ${M}_{RB , b , f , c}^{PUSCH} \left(i\right)$ is bandwidth of the PUSCH. *α_{b,f,c}*(*j*) is a path loss factor. *PL_{b,f,c}*(*q_{d}*) is path loss, measured by the terminal device, of a downlink reference signal *q_{d}. Δ_{TF,b,f,c}*(*i*) is an offset related to a modulation and coding scheme (modulation and coding scheme, MCS). *f_{b,f,c}*(*i, l*) is a closed-loop power control and adjustment amount.

When the terminal device has determined type 1 PHR based on one actual PUSCH transmission in an activated serving cell, the terminal device calculates the type 1 PHR for the PUSCH transmission occasion i on the uplink BWP *b* of the carrier *f* of the cell *c*: ${PH}_{type 1 , b , f , c} \left(i, j, {q}_{d}, l\right) = {P}_{CMAX , f , c} \left(i\right) - \left\{{P}_{O_PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅{PL}_{b , f , c}\left({q}_{d}\right)+{Δ}_{TF , b , f , c}\left(i\right)+{f}_{b , f , c}\left(i, l\right)\right\}$

When the terminal device has determined type 1 PHR based on one reference PUSCH transmission in an activated serving cell, the terminal device calculates the type 1 PHR for the PUSCH transmission occasion i on the uplink BWP *b* of the carrier *f* of the cell *c*: ${PH}_{type 1 , b , f , c} \left(i, j, {q}_{d}, l\right) = {{P}^{˜}}_{CMAX , f , c} \left(i\right) - \left\{{P}_{O_PUSCH , b , f , c}\left(j\right)+{α}_{b , f , c}\left(j\right)⋅{PL}_{b , f , c}\left({q}_{d}\right)+{f}_{b , f , c}\left(i, l\right)\right\}$

If the terminal device transmits uplink data, that is, an SRS, on an uplink BWP *b* of a carrier *f* of a cell *c* by using a sounding reference signal (sounding reference signal, SRS) power control and adjustment state with an index *l*, transmit power of the SRS on the transmission occasion i is as follows: ${P}_{SRS , b , f , c} \left(i, {q}_{s}, l\right) = min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\}$

*P_{CMAX,f,c}*(*i*) is maximum transmit power configured for the UE. *P*_{*O_SRS*,*b*,*f*,*c*} (*qₛ*) is expected receive power configured by the network device for the terminal device. *µ* is a subcarrier spacing. ${M}_{RB , b , f , c}^{SRS} \left(i\right)$ is bandwidth of the SRS. *α_{SRS,b,f,c}*(*qₛ*) is a path loss factor. *PL_{b,f,c}*(*qₛ*) is path loss, measured by the terminal device, of a downlink reference signal *qₛ*, and is measured in dB. *h_{b,f,c}*(*i, l*) is a closed-loop power control and adjustment amount.

When the terminal device has determined type 3 PHR based on one actual SRS transmission in an activated serving cell, the terminal device calculates the type 3 PHR for the SRS transmission occasion i on the uplink BWP *b* of the carrier *f* of the cell *c*: ${PH}_{type 3 , b , f , c} \left(i, {q}_{s}\right) = {P}_{CMAX , f , c} \left(i\right) - \left\{{P}_{O_SRS , b , f , c}\left({q}_{s}\right)+10{log}_{10}\left({2}^{μ}⋅{M}_{SRS , b , f , c}\left(i\right)\right)+{α}_{SRS , b , f , c}\left({q}_{s}\right)⋅{PL}_{b , f , c}\left({q}_{d}\right)+{h}_{b , f , c}\left(i\right)\right\}$

When the terminal device has determined type 3 PHR based on one reference SRS transmission in an activated serving cell, the terminal device calculates the type 3 PHR for the SRS transmission occasion i on the uplink BWP *b* of the carrier *f* of the cell *c*: ${PH}_{type 3 , b , f , c} \left(i, {q}_{s}\right) = {{P}^{˜}}_{CMAX , f , c} \left(i\right) - \left\{{P}_{O_SRS , b , f , c}\left({q}_{s}\right)+{α}_{SRS , b , f , c}\left({q}_{s}\right)⋅{PL}_{b , f , c}\left({q}_{d}\right)+{h}_{b , f , c}\left(i\right)\right\}$

In the conventional technology, before performing PHR, a terminal device needs to meet a specific condition to trigger the PHR.

In an example, when a medium access control (medium access control, MAC) entity has an uplink resource for new transmission and a timer (phr-Prohibit Timer) expires or has expired, PHR is performed if a change of path loss of at least one activated cell in any MAC entity compared with path loss of the cell in the MAC during previous PHR transmission is greater than a threshold (phr-Tx-Power Factor Change). A threshold (phr-Tx-Power Factor Change) parameter is used as a reference for path loss.

Alternatively, PHR is performed when a timer (phr-Periodic Timer) expires.

Alternatively, PHR is performed when a PHR function is configured or reconfigured by an upper layer and the PHR function is not disabled.

Alternatively, PHR is performed when uplink secondary cell (secondary cell, SCell) activation or secondary cell group (secondary cell group, SCG) activation is configured in any MAC entity.

Alternatively, PHR is performed when a primary secondary cell (primary secondary cell, PSCell) is added.

In another example, when a MAC entity has an uplink resource for new transmission and a timer (phr-Prohibit Timer) expires or has expired, PHR is performed if any serving cell with an uplink configuration is activated in any MAC, the cell has an uplink resource for transmission or has physical uplink control channel (physical uplink control channel, PUCCH) transmission, and a change of a power reduction in the cell caused by power management compared with a power reduction during previous PHR transmission performed when the MAC entity has PUSCH or PUCCH transmission is greater than a threshold (phr-Tx-Power Factor Change).

Alternatively, PHR is performed when an active BWP of an SCell of any MAC entity with an uplink configuration switches from a sleep BWP to a non-sleep downlink (downlink, DL) BWP.

Alternatively, PHR is performed when mpe-Reporting-FR2 is configured, a timer (mpe-Prohibit Timer) is not running, and a maximum power reduction (power management-maximum power reduction, P-MPR), for meeting an FR2 maximum permissible emission (maximum permissible emission, MPE) requirement, in at least one activated frequency range 2 (Frequency range 2, FR2) serving cell since previous PHR transmission is greater than or equal to a maximum permissible emission threshold (mpe-Threshold).

Alternatively, PHR is performed when a change of measured P-MPR for meeting an FR2 MPE requirement since previous PHR transmission is greater than a threshold (phr-Tx-Power Factor Change).

Currently, in uplink power control of a terminal device, path loss between the terminal device and a network device needs to be obtained. For a conventional network device (for example, a base station), uplink path loss and downlink path loss of the terminal device are equivalent. Therefore, when performing PHR, the terminal device may obtain the uplink path loss by performing a measurement on a downlink reference signal and based on downlink reference signal transmit power indicated by the base station, and then determine, based on a timer (phr-Prohibit Timer) and depending on whether a change between uplink path loss during previous PHR and the current uplink path loss exceeds a threshold, whether to perform PHR.

To improve an uplink capability of a network, a base station in a new form is provided, is referred to as an uplink only transmission reception point (Uplink only transmission-reception point, Uplink only TRP), and may serve as an additional supplement to a conventional base station, to improve uplink coverage. In a scenario including an uplink only TRP, a terminal device may send an uplink signal to the uplink only TRP, and receive a downlink signal from a conventional base station. For example, in the communication system shown in FIG. 1, the network device 110a serves as a conventional base station, the network device 110b serves as an uplink only TRP, and the terminal device 120a sends an uplink signal to the network device 110b, and receives a downlink signal from the network device 110a. However, because physical locations of the network device 110a and the network device 110b are different, downlink path loss measured by the terminal device 120a is not equivalent to actual uplink path loss.

For a problem that downlink path loss measured by a terminal device is not equivalent to actual uplink path loss, a solution is as follows: A network device sends a path loss offset value between the uplink path loss and the downlink path loss to the terminal device, and the terminal device determines, based on the path loss offset value and the measured downlink path loss, the uplink path loss used for uplink power control. For example, the path loss offset value is denoted as *Δ*, and the downlink path loss is denoted as *PL_{DL}.* In this case, the uplink path loss *PL_{UL}* is determined based on *Δ* and *PL_{DL},* and may be a sum of *Δ* and *PL_{DL},* that is, *PL_{UL}* = *PL_{DL} + Δ,* or may be a difference between *Δ* and *PL_{DL},* that is, *PL_{UL}* = *PL_{DL}* - *Δ*, or may be a product of *Δ* and *PL_{DL},* that is, *PL_{UL}* = *Δ · PL_{DL}.* It can be understood that a specific form of the offset value is not limited in embodiments of this application.

Because the downlink path loss measured by the terminal device 120a is not equivalent to the actual uplink path loss, power headroom reporting is affected. For example, in the communication system shown in FIG. 1, a threshold (phr-Tx-Power Factor Change) indicated by the network device 110a to the terminal device 120a is 6*dB,* and a counter (phr-Prohibit Timer) indicated by the network device 110a to the terminal device 120a is sf100. At a moment *t*₀, downlink path loss measured by the terminal device 120a is ${PL}_{DL}^{{t}_{0}} = 80 dB$*,* a path loss offset value indicated by the network device 110a to the terminal device 120a is *Δ*^{*t*₀} = -15 *dB,* and the terminal device 120a performs power headroom reporting once based on ${PL}_{DL}^{{t}_{0}}$ and *Δ*^{*t*₀}. At a moment *t*₁ (a time difference between the moment *t*₀ and the moment *t*₁ is greater than 100 subframes), when the terminal device 120a moves away from the network device 110a and toward the network device 110b, downlink path loss ${PL}_{DL}^{{t}_{1}}$ measured by the terminal device 120a increases to 85 *dB,* but actual uplink path loss decreases to ${PL}_{UL}^{{t}_{1}} = 55 dB$*.* However, the network device 110a does not indicate a new path loss offset value to the terminal device 120a. In this case, although an actual uplink path loss change is 10 *dB* and is greater than the threshold 6 *dB* and the timer (phr-Prohibit Timer) is in an expired state, because a change between downlink path loss obtained by the terminal device 120a through two measurements is 5 *dB* and is less than the threshold 6 *dB,* power headroom reporting cannot be triggered. Therefore, a method for triggering power headroom reporting based on downlink path loss in the conventional technology is inapplicable to an application scenario including a UL only TRP.

To resolve the foregoing problem, this application provides a method and an apparatus for triggering power headroom reporting, and a terminal device. The terminal device may determine, based on measured downlink path loss, a path loss offset value indicated by a network device, and a status of a timer, whether to perform power headroom reporting.

In embodiments of this application, a specific structure of an entity for performing the method for triggering power headroom reporting is not particularly limited in embodiments of this application, provided that the entity can run a program that records code of the method for triggering power headroom reporting in embodiments of this application to perform communication according to the method for triggering power headroom reporting in embodiments of this application. For example, the method for triggering power headroom reporting in embodiments of this application may be performed by a functional module that is in a terminal device and that can invoke the program and execute the program or by a communication apparatus, for example, a chip, used in a terminal device. The method for triggering power headroom reporting in embodiments of this application may be performed by a functional module that is in a network device and that can invoke the program and execute the program or by a communication apparatus, for example, a chip, used in a network device. This is not limited in this application.

An embodiment of this application provides a method for triggering power headroom reporting, applied to a communication system including a UL only TRP. FIG. 2 is a schematic flowchart of a method for triggering power headroom reporting according to an embodiment of this application. The method includes the following steps.

Step S201: A terminal device receives at least one first path loss offset value and at least one second path loss offset value. Correspondingly, a network device sends the at least one first path loss offset value and the at least one second path loss offset value to the terminal device. The at least one first path loss offset value and the at least one second path loss offset value are from the network device.

As a conventional base station, the network device is only configured to send a downlink signal to the terminal device.

The path loss offset value is a relationship coefficient between downlink path loss and uplink path loss. It can be understood that the uplink path loss may be obtained based on the path loss offset value and the downlink path loss.

Specifically, the first path loss offset value is a relationship coefficient between first downlink path loss and first uplink path loss, and the second path loss offset value is a relationship coefficient between second downlink path loss and second uplink path loss.

The first path loss offset value and the second path loss offset value are received by the terminal device at two different moments or in two different time periods.

In an example, the terminal device receives the first path loss offset value at a first moment, and receives the second path loss offset value at a second moment; or the terminal device receives the first path loss offset value at any moment in a first time period, and receives the second path loss offset value at any moment in a second time period.

Step S202: The terminal device performs power headroom reporting based on the at least one first path loss offset value and the at least one second path loss offset value.

Content in the power headroom reporting includes a difference between maximum permissible transmit power and actual transmit power or reference transmit power. The network device performs power control based on information in the power headroom reporting.

The terminal device directly performs power headroom reporting based on the at least one first path loss offset value and the at least one second path loss offset value; or may determine the first uplink path loss and the second uplink path loss based on the at least one first path loss offset value and the at least one second path loss offset value, and then perform power headroom reporting based on the first uplink path loss and the second uplink path loss. The following describes the two cases separately.

Case 1: The terminal device directly performs power headroom reporting based on the at least one first path loss offset value and the at least one second path loss offset value.

In a possible embodiment of this application, when the terminal device receives one second path loss offset value after receiving one first path loss offset value, that the terminal device performs power headroom reporting based on the at least one first path loss offset value and the at least one second path loss offset value includes:

The terminal device performs power headroom reporting when a variation between the first path loss offset value and the second path loss offset value is greater than or equal to a first preset threshold.

The first preset threshold is determined by the network device.

In an example, the terminal device receives a first path loss offset value *Δ*^{*t*₀} at the first moment, and then receives a second path loss offset value *Δ*^{*t*₁} at the second moment. When a variation *Δ^{T}* between the first path loss offset value *Δ*^{*t*₀} and the second path loss offset value *Δ*^{*t*₁} is greater than or equal to the first preset threshold, the terminal device performs power headroom reporting. The variation *Δ^{T}* is a difference between the first path loss offset value *Δ*^{*t*₀} and the second path loss offset value *Δ^{t₁},* and an absolute value is used when the variation is compared with the first preset threshold.

For example, the terminal device receives a first path loss offset value at a moment t0: *Δ^{t₀}*=*-*3 dB; and receives a second path loss offset value at a moment t1: *Δ*^{*t*₁}=-5 dB. In this case, a variation is as follows: *Δ^{T}*= -3 dB-(-5 dB)=2 dB; and the variation 2 dB is compared with the first preset threshold. Alternatively, the terminal device receives a first path loss offset value at a moment t0: *Δ*^{*t*₀}=-3 dB; and receives a second path loss offset value at a moment t1: *Δ*^{*t*₁}=-1 dB. In this case, a variation is as follows: *Δ^{T}*=-3 dB-(-1 dB)=-2 dB; and an absolute value 2 dB is compared with the first preset threshold.

Optionally, the method provided in this embodiment of this application further includes: The terminal device performs power headroom reporting when the variation between the first path loss offset value and the second path loss offset value is greater than or equal to the first preset threshold and the first path loss offset value has been used for power headroom reporting.

That the first path loss offset value has been used for power headroom reporting may be that the first path loss offset value has been used for latest power headroom reporting or previous power headroom reporting. This is not limited in this embodiment of this application.

In an example, the terminal device has received the first path loss offset value and used the first path loss offset value for power headroom reporting before the first moment, or the first path loss offset value is used for power headroom reporting after the first moment and before the second moment.

In a possible embodiment of this application, when the terminal device receives the at least one second path loss offset value after receiving one first path loss offset value, that the terminal device performs power headroom reporting based on the at least one first path loss offset value and the at least one second path loss offset value includes:

The terminal device determines a third path loss offset value based on the first path loss offset value and the at least one second path loss offset value.

The terminal device performs power headroom reporting when a variation between the first path loss offset value and the third path loss offset value is greater than or equal to a second preset threshold.

The third path loss offset value is obtained by updating the second path loss offset value based on the first path loss offset value. For example, that an update periodicity corresponding to the first path loss offset value is long is indicated through a radio resource control (radio resource control, RRC) layer, and that an update periodicity corresponding to the second path loss offset value is short is indicated by downlink control information (downlink control information, DCI).

In an example, when the terminal device determines the third path loss offset value based on the first path loss offset value and one second path loss offset value, the third path loss offset value is a sum of the first path loss offset value and the second path loss offset value, or the third path loss offset value is a product of the first path loss offset value and the second path loss offset value.

In another example, when the terminal device determines the third path loss offset value based on the first path loss offset value and a plurality of second path loss offset values, the third path loss offset value is a sum of the first path loss offset value and the plurality of second path loss offset values, or the third path loss offset value is a product of the first path loss offset value and the plurality of second path loss offset values.

The second preset threshold is determined by the network device.

For example, the terminal device receives a first path loss offset value *Δ*^{*t*₀} at the first moment, and then receives a second path loss offset value *Δ*^{*t*₁} at the second moment. In this case, it is determined that the third path loss offset value is as follows: *Δ*^{*t*₂} = *Δ*^{*t*₀} *+ Δ*^{*t*₁}*,* or *Δ*^{*t*₂} = *Δ*^{*t*₀} × *Δ*^{t₁}. When a variation *Δ^{T}* between the first path loss offset value *Δ*^{*t*₀} and the third path loss offset value *Δ*^{*t*₂} is greater than or equal to the second preset threshold, the terminal device performs power headroom reporting. The variation *Δ^{T}* is a difference between the first path loss offset value *Δ*^{*t*₀} and the third path loss offset value *Δ*^{*t*₂}, and an absolute value is used when the variation is compared with the second preset threshold.

For example, the terminal device receives a first path loss offset value *Δ*^{*t*₀} at the first moment, and then receives a plurality of second path loss offset values at the second moment, for example, three second path loss offset values: *Δ*^{*t*₁₁}*, Δ*^{*t*₁₂}*,* and *Δ*^{*t*₁₃}*.* In this case, it is determined that the third path loss offset value is as follows: *Δ*^{*t*₂} = *Δ*^{*t*₀} *+ Δ*^{*t*₁₁} *+ Δ*^{*t*₁₂} *+ Δ*^{*t*₁₃}*,* or *Δ*^{*t*₂} = *Δ*^{*t*₀} × *Δ*^{t₁₁} × *Δ*^{t₁₂} × *Δ*^{*t*₁₃}. When a variation *Δ^{T}* between the first path loss offset value *Δ*^{*t*₀} and the third path loss offset value *Δ*^{*t*₂} is greater than or equal to the second preset threshold, the terminal device performs power headroom reporting.

Optionally, the method provided in this embodiment of this application further includes: The terminal device performs power headroom reporting when the variation between the first path loss offset value and the third path loss offset value is greater than or equal to the first preset threshold and the first path loss offset value has been used for power headroom reporting. That the first path loss offset value has been used for power headroom reporting may be that the first path loss offset value has been used for latest power headroom reporting or has been used for previous power headroom reporting. This is not limited in this embodiment of this application.

In a possible embodiment of this application, when the terminal device receives the at least one second path loss offset value after receiving the at least one first path loss offset value, that the terminal device performs power headroom reporting based on the at least one first path loss offset value and the at least one second path loss offset value includes:

The terminal device determines a fourth path loss offset value based on a plurality of first path loss offset values.

The terminal device determines a fifth path loss offset value based on a plurality of second path loss offset values.

The terminal device performs power headroom reporting when a variation between the fourth path loss offset value and the fifth path loss offset value is greater than or equal to a third preset threshold.

In an example, the fourth path loss offset value used for uplink transmit power control in a first slot is obtained by accumulating the plurality of first path loss offset values, and the fifth path loss offset value used for uplink transmit power control in a second slot is obtained by accumulating the plurality of second path loss offset values.

The third preset threshold is determined by the network device.

For example, the terminal device receives a plurality of first path loss offset values at the first moment, for example, *Δ*^{*t*₀₁}*, Δ*^{*t*₀₂}, and *Δ*^{*t*₀₃}, and then receives a plurality of second path loss offset values at the second moment, for example, *Δ*^{*t*₁₁}, *Δ*^{*t*₁₂}, and *Δ*^{*t*₁₃}*.* In this case, it is determined that the fourth path loss offset value is as follows: *Δ*^{*t*₃} = *Δ*^{*t*₀₁} *+ Δ*^{*t*₀₂} *+ Δ*^{*t*₀₃}*,* or *Δ*^{*t*₃} = *Δ*^{*t*₀₁} × *Δ*^{*t*₀₂} × *Δ*^{*t*₀₃}; and it is determined that the fifth path loss offset value is as follows: *Δ*^{*t*₄} = *Δ*^{*t*₁₁} *+ Δ*^{*t*₁₂} *+ Δ*^{*t*₁₃}, or *Δ^{t₄}* = *Δ*^{*t*₁₁} × *Δ*^{*t*₁₂} × *Δ*^{*t*₁₃}. When a variation *Δ^{T}* between the fourth path loss offset value *Δ*^{*t*₃} and the fifth path loss offset value *Δ*^{*t*₄} is greater than or equal to the third preset threshold, the terminal device performs power headroom reporting. The variation *Δ^{T}* is a difference between the fourth path loss offset value *Δ*^{*t*₃} and the fifth path loss offset value *Δ^{t₄},* and an absolute value is used when the variation is compared with the third preset threshold.

Optionally, the method provided in this embodiment of this application further includes: The terminal device performs power headroom reporting when the variation between the fourth path loss offset value and the fifth path loss offset value is greater than or equal to the first preset threshold and the first path loss offset value has been used for power headroom reporting. That the first path loss offset value has been used for power headroom reporting may be that the first path loss offset value has been used for latest power headroom reporting or previous power headroom reporting. This is not limited in this embodiment of this application.

In a possible embodiment of this application, the method provided in this embodiment of this application further includes: The terminal device performs power headroom reporting based on the at least one first path loss offset value, the at least one second path loss offset value, and a status of a counter.

In an example, when the terminal device receives one second path loss offset value after receiving one first path loss offset value, the terminal device performs power headroom reporting when the variation between the first path loss offset value and the second path loss offset value is greater than or equal to the first preset threshold and the status of the counter is an expired state.

Optionally, the method provided in this embodiment of this application further includes: The terminal device performs power headroom reporting when the variation between the first path loss offset value and the second path loss offset value is greater than or equal to the first preset threshold, the timer is in the expired state, and the first path loss offset value has been used for power headroom reporting.

In an example, when the terminal device receives a plurality of second path loss offset values after receiving one first path loss offset value, the terminal device performs power headroom reporting when the variation between the first path loss offset value and the third path loss offset value is greater than or equal to the second preset threshold and the status of the counter is the expired state.

Optionally, the method provided in this embodiment of this application further includes: The terminal device performs power headroom reporting when the variation between the first path loss offset value and the third path loss offset value is greater than or equal to the first preset threshold, the timer is in the expired state, and the first path loss offset value has been used for power headroom reporting.

In an example, when the terminal device receives a plurality of second path loss offset values after receiving a plurality of first path loss offset values, the terminal device performs power headroom reporting when the variation between the fourth path loss offset value and the fifth path loss offset value is greater than or equal to the third preset threshold and the status of the counter is the expired state.

Optionally, the method provided in this embodiment of this application further includes: The terminal device performs power headroom reporting when the variation between the fourth path loss offset value and the fifth path loss offset value is greater than or equal to the first preset threshold, the timer is in the expired state, and the first path loss offset value has been used for power headroom reporting.

It can be understood that, that the first path loss offset value has been used for power headroom reporting may be that the first path loss offset value has been used for latest power headroom reporting or has been used for previous power headroom reporting. This is not limited in this embodiment of this application.

It should be noted that the first preset threshold, the second preset threshold, and the third preset threshold may be the same or different. This is not limited in this embodiment of this application.

It should be noted that, that the timer is in the expired state may be that the timer times out or has timed out, or the timer expires. This is not limited in this embodiment of this application.

Case 2: The terminal device determines the first uplink path loss and the second uplink path loss based on the at least one first path loss offset value and the at least one second path loss offset value, and then performs power headroom reporting based on the first uplink path loss and the second uplink path loss.

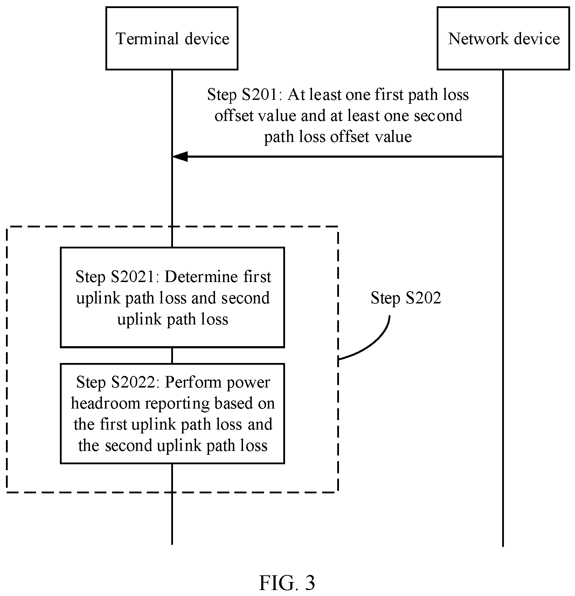

In a possible embodiment of this application, that the terminal device performs power headroom reporting based on the at least one first path loss offset value and the at least one second path loss offset value in step S202 includes the following steps, as shown in FIG. 3.

Step S2021: The terminal device determines the first uplink path loss and the second uplink path loss.

The first uplink path loss is determined based on the first downlink path loss and the at least one first path loss offset value, and the second uplink path loss is determined based on the second downlink path loss and the at least one second path loss offset value, or is determined based on the at least one first path loss offset value, the second downlink path loss, and the at least one second path loss offset value.

The first downlink path loss and the second downlink path loss are measured by the terminal device.

In an example, the terminal device measures the first downlink path loss at the first moment, and the terminal device measures the second downlink path loss at the second moment.

In an example, at the first moment, the first uplink path loss is a sum or a product of the first downlink path loss and the first path loss offset value; and at the second moment, the second uplink path loss is a sum or a product of the second downlink path loss and the at least one second path loss offset value, or the second uplink path loss is a sum or a product of the second downlink path loss and a third path loss offset value, where the third path loss offset value is a sum or a product of the first path loss offset value and the at least one second path loss offset value.

In a possible embodiment of this application, the first path loss offset value is a difference or an offset coefficient between the first downlink path loss and the first uplink path loss, and the second path loss offset value is a difference or an offset coefficient between the second downlink path loss and the second uplink path loss.

In an example, when the path loss offset value is a difference between the downlink path loss and the uplink path loss, the first uplink path loss is equal to a sum of the first downlink path loss and the at least one first path loss offset value. Similarly, the second uplink path loss is equal to a sum of the second downlink path loss and the at least one second path loss offset value.

For example, at the first moment t0, the terminal device measures first downlink path loss ${PL}_{DL}^{{t}_{0}}$*,* and receives a first path loss offset value *Δ*^{*t*₀} from the network device. In this case, it is determined that the first uplink path loss is as follows: ${PL}_{UL}^{{t}_{0}} = {PL}_{DL}^{{t}_{0}} + {Δ}^{{t}_{0}}$*.* At the second moment t1, the terminal device measures second downlink path loss ${PL}_{DL}^{{t}_{1}}$*,* and receives a second path loss offset value *Δ*^{*t*₁} from the network device. In this case, it is determined that the second uplink path loss is as follows: ${PL}_{UL}^{{t}_{1}} = {PL}_{DL}^{{t}_{1}} + {Δ}^{{t}_{1}}$*.*

In another example, when the path loss offset value is an offset coefficient between the downlink path loss and the uplink path loss, the first uplink path loss is equal to a product of the first downlink path loss and the at least one first path loss offset value. Similarly, the second uplink path loss is equal to a product of the second downlink path loss and the at least one second path loss offset value.

For example, at the first moment t0, the terminal device measures first downlink path loss ${PL}_{DL}^{{t}_{0}}$*,* and receives a first path loss offset value *Δ*^{*t*₀} from the network device. In this case, it is determined that the first uplink path loss is as follows: ${PL}_{UL}^{{t}_{0}} = {PL}_{DL}^{{t}_{0}} ⋅ {Δ}^{{t}_{0}}$*.* At the second moment t1, the terminal device measures second downlink path loss ${PL}_{DL}^{{t}_{1}}$*,* and receives a second path loss offset value *Δ*^{*t*₁} from the network device. In this case, it is determined that the second uplink path loss is as follows: ${PL}_{UL}^{{t}_{1}} = {PL}_{DL}^{{t}_{1}} ⋅ {Δ}^{{t}_{1}}$*.*

In a possible implementation of this application, the first uplink path loss is determined based on the first downlink path loss and the at least one first path loss offset value, and the second uplink path loss is determined based on the second downlink path loss and the at least one second path loss offset value.

In an example, at the first moment, the terminal device receives the first path loss offset value and obtains the first downlink path loss, and the terminal device determines the first uplink path loss based on the first path loss offset value and the first downlink path loss. At the second moment, the terminal device receives the second path loss offset value and measures the second downlink path loss, and the terminal device determines the second uplink path loss based on the second path loss offset value and the second downlink path loss.

In another possible implementation of this application, the first uplink path loss is determined based on the first downlink path loss and the at least one first path loss offset value, and the second uplink path loss is determined based on the at least one first path loss offset value, the second downlink path loss, and the at least one second path loss offset value.

In an example, at the first moment, the terminal device receives the first path loss offset value and measures the first downlink path loss, and the terminal device determines the first uplink path loss based on the first path loss offset value and the first downlink path loss. At the second moment, the terminal device receives the second path loss offset value and measures the second downlink path loss, where the second path loss offset value is used to update the first path loss offset value; and the terminal device determines the second uplink path loss based on the first path loss offset value, the second downlink path loss, and the second path loss offset value.

For example, at the first moment t0, the terminal device measures first downlink path loss ${PL}_{DL}^{{t}_{0}}$*,* and receives a first path loss offset value *Δ*^{*t*₀} from the network device. In this case, it is determined that the first uplink path loss is as follows: ${PL}_{UL}^{{t}_{0}} = {PL}_{DL}^{{t}_{0}} \times {Δ}^{{t}_{0}}$*,* or ${PL}_{UL}^{{t}_{0}} = {PL}_{DL}^{{t}_{0}} + {Δ}^{{t}_{0}}$*.* At the second moment t1, the terminal device measures second downlink path loss ${PL}_{DL}^{{t}_{1}}$*,* and receives at least one second path loss offset value *Δ*^{*t*₁} from the network device, where the second path loss offset value *Δ*^{*t*₁} is used to update the first path loss offset value *Δ*^{*t*₀}. In this case, it is determined that the second uplink path loss is as follows: ${PL}_{UL}^{t 1} = {PL}_{DL}^{{t}_{1}} + {Δ}^{{t}_{0}} \times {Δ}^{{t}_{1}}$, or ${PL}_{UL}^{t 1} = {PL}_{DL}^{{t}_{1}} + {Δ}^{{t}_{0}} + {Δ}^{{t}_{1}}$ *.*

Step S2022: The terminal device performs power headroom reporting based on the first uplink path loss and the second uplink path loss.

In a possible embodiment of this application, performing power headroom reporting based on the first uplink path loss and the second uplink path loss includes: The terminal device performs power headroom reporting when a variation between the first uplink path loss and the second uplink path loss is greater than or equal to a fourth preset threshold.

The fourth preset threshold is determined by the network device.

For example, the network device sets the fourth preset threshold to 10 dB. The terminal device determines, based on the first downlink path loss and the first path loss offset value, that the first uplink path loss is 70 dB; and determines, based on the second downlink path loss and the second path loss offset value, that the second uplink path loss is 90 dB. In this case, the variation between the first uplink path loss and the second uplink path loss is 20 dB, which is greater than the first preset threshold 10 dB, and therefore the terminal device performs power headroom reporting. Alternatively, the terminal device determines, based on the second downlink path loss and the second path loss offset value, that the second uplink path loss is 75 dB. In this case, the variation between the first uplink path loss and the second uplink path loss is 5 dB, which is less than the first preset threshold 10 dB, and therefore the terminal device does not trigger power headroom reporting.

Optionally, the method provided in this embodiment of this application further includes: The terminal device performs power headroom reporting when the variation between the first uplink path loss and the second uplink path loss is greater than or equal to the fourth preset threshold and the first uplink path loss has been used for power headroom reporting.

That the first uplink path loss has been used for power headroom reporting may be that the first uplink path loss has been used for latest power headroom reporting or previous power headroom reporting. This is not limited in this embodiment of this application.

In an example, at the first moment, the terminal device receives the first path loss offset value, obtains the first downlink path loss, and determines the first uplink path loss based on the first path loss offset value and the first downlink path loss. The first uplink path loss has been used for power headroom reporting before the first moment, or is used for power headroom reporting after the first moment and before the second moment. Therefore, the terminal device performs power headroom reporting.

In a possible embodiment of this application, the at least one first path loss offset value is received in the first time period, and the at least one second path loss offset value is received in the second time period, where the first time period is before the second time period.

In an example, a path loss offset value used for uplink transmit power control in a first slot is obtained by accumulating a plurality of first path loss offset values, and the plurality of first path loss offset values are sent by the network device to the terminal device in the first time period before the first slot; and a path loss offset value used for uplink transmit power control in a second slot is obtained by accumulating a plurality of second path loss offset values, and the plurality of second path loss offset values are sent by the network device to the terminal device in the second time period after the first slot and before the second slot.

In a possible embodiment of this application, the terminal device may obtain the downlink path loss and receive the path loss offset value in a same time period or in different time periods. For example, if the terminal device receives the first path loss offset value in the first time period, the terminal device may obtain the first downlink path loss in a time range before or after the first time period.

In a possible implementation of this application, the first downlink path loss is obtained at a last time or within first preset time before the first time period; or the first downlink path loss is obtained at a most recent time or within second preset time after the first time period.

The first time period and the second time period may alternatively be the first moment and the second moment. For example, the terminal device receives one first path loss offset value at the first moment, and receives one second path loss offset value at the second moment.

An example in which the terminal device receives one first path loss offset value at the first moment and receives one second path loss offset value at the second moment is used below for description.

In an example, the terminal device measures the first downlink path loss at an interval of preset time. When receiving the first path loss offset value at the first moment, the terminal device uses downlink path loss obtained at a last measurement before the first moment as the first downlink path loss.

For example, the terminal device measures downlink path loss once every 10 ms, for example, measures downlink path loss once at each of *t*₁, *t*₁+10 ms, and *t*₁+20 ms. When the first moment is *t*₁+25 ms, to be specific, when the terminal device receives the first path loss offset value at *t*₁+25 ms, downlink path loss measured at *t*₁+20 ms is used as the first downlink path loss. It can be understood that downlink path loss is measured a plurality of times before *t*₁+25 ms, and the first downlink path loss is obtained at a last time before the first moment.

In another example, when receiving the first path loss offset value at the first moment, the terminal device uses downlink path loss measured within first preset time before the first moment as the first downlink path loss.

For example, the first preset time is 10 ms. When the first moment is *t*₁+25 ms, to be specific, when the terminal device receives the first path loss offset value at *t*₁+25 ms, downlink path loss measured within *t*₁+15 ms to *t*₁+25 ms is used as the first downlink path loss.

In an example, the terminal device measures the first downlink path loss at a preset interval. When receiving the first path loss offset value at the first moment, the terminal device uses downlink path loss obtained at a most recent measurement after the first moment as the first downlink path loss.

For example, the terminal device measures downlink path loss once every 10 ms, for example, measures downlink path loss once at each of *t*₁, *t*₁+10 ms, and *t*₁+20 ms. When the first moment is *t*₁+8 ms, to be specific, when the terminal device receives the first path loss offset value at *t*₁+8 ms, downlink path loss measured at *t*₁+10 ms is used as the first downlink path loss. It can be understood that downlink path loss is measured a plurality of times after *t*₁+8 ms, and the first downlink path loss is obtained at a most recent time after the first moment.

In another example, when receiving the first path loss offset value at the first moment, the terminal device uses downlink path loss measured within second preset time after the first moment as the first downlink path loss.

For example, the first preset time is 10 ms. When the first moment is *t*₁+8 ms, to be specific, when the terminal device receives the first path loss offset value at *t*₁+8 ms, downlink path loss measured within *t*₁+8 ms to *t*₁+18 ms is used as the first downlink path loss.

It should be noted that the first preset time and the second preset time may be the same or different. This is not limited in this embodiment of this application.

In a possible implementation of this application, the second downlink path loss is obtained at a last time or within first preset time before the second moment; or the second downlink path loss is obtained at a most recent time or within second preset time after the second moment.

It can be understood that time at which the terminal device obtains the second downlink path loss is similar to time at which the terminal device obtains the first downlink path loss, and details are not described herein again.

It should be noted that duration of the first preset time is less than duration between the first moment and the second moment, and the first preset time or the second preset time may be the same as or different from a time interval at which the terminal device measures the first downlink path loss or the second downlink path loss. This is not limited in this embodiment of this application.

It can be understood that, when the terminal device receives the at least one first path loss offset value in the first time period and receives the at least one second path loss offset in the second time period, a specific implementation is similar to that in the foregoing embodiment, and details are not described herein again. For example, the third path loss offset value is determined by updating the first path loss offset value based on the at least one second path loss offset value; or a fourth path loss offset value is determined based on a plurality of first path loss offsets, and a fifth path loss offset value is determined based on a plurality of second path loss offset values.

In a possible embodiment of this application, when the at least one second path loss offset value is not received from the network device after the at least one first path loss offset value is received, the second uplink path loss is determined based on the first downlink path loss and the at least one first path loss offset value.

After receiving the at least one first path loss offset value from the network device, the terminal device may not receive the at least one second path loss offset value. For example, the network device sends the at least one first path loss offset value to the terminal device at the first moment, and correspondingly, the terminal device receives the at least one first path loss offset value from the network device at the first moment; and the network device does not send the at least one second path loss offset value to the terminal device in a timely manner at the second moment, and correspondingly, the terminal device does not receive the at least one second path loss offset value at the second moment.

For example, the terminal device measures first downlink path loss ${PL}_{DL}^{{t}_{0}}$ and receives a first path loss offset value *Δ*^{*t*₀} from the network device, and the terminal device calculates the first uplink path loss based on ${PL}_{DL}^{{t}_{0}}$ and ${Δ}^{{t}_{0}} : {PL}_{UL}^{{t}_{0}} = {PL}_{DL}^{{t}_{0}} + {Δ}^{{t}_{0}}$*.* The terminal device receives no second path loss offset value. In this case, the terminal device calculates the second uplink path loss based on ${PL}_{DL}^{{t}_{0}}$ and ${Δ}^{{t}_{0}} : {PL}_{UL}^{{t}_{1}} = {PL}_{DL}^{{t}_{0}} + {Δ}^{{t}_{0}}$*.*

In a possible embodiment of this application, when the at least one second path loss offset value is not received from the network device after the at least one first path loss offset value is received, no power headroom reporting is performed.

For example, at the first moment t0, the terminal device measures first downlink path loss ${PL}_{DL}^{{t}_{0}}$ and receives a first path loss offset value *Δ*^{*t*₀} from the network device, and the terminal device calculates the first uplink path loss based on ${PL}_{DL}^{{t}_{0}}$ and ${Δ}^{{t}_{0}} : {PL}_{UL}^{{t}_{0}} = {PL}_{DL}^{{t}_{0}} + {Δ}^{{t}_{0}}$*.* At the second moment t1, the terminal device measures second downlink path loss ${PL}_{DL}^{{t}_{1}}$ but receives no second path loss offset value. In this case, the terminal device calculates the second uplink path loss based on ${PL}_{DL}^{{t}_{0}}$ and ${Δ}_{RSRP}^{{t}_{0}} : {PL}_{UL}^{{t}_{1}} = {PL}_{DL}^{{t}_{0}} + {Δ}^{{t}_{0}}$*.* In other words, the first uplink path loss is equal to the second uplink path loss. To be specific, the variation between the first uplink path loss and the second uplink path loss is 0. Therefore, the terminal device does not perform power headroom reporting.

In this application, the terminal device obtains, in the first time period and the second time period respectively, the at least one first path loss offset value and the at least one second path loss offset value that are sent by the network device, and directly performs power headroom reporting based on the at least one first path loss offset value and the at least one second path loss offset value. Alternatively, the terminal device further measures the first downlink path loss and the second downlink path loss, determines the first uplink path loss and the second uplink path loss, and then compares the first uplink path loss with the second uplink path loss to determine the variation between the first uplink path loss and the second uplink path loss. When the variation is greater than or equal to a preset threshold, the terminal device triggers power headroom reporting. In this application, the network device indicates the path loss offset value, and the terminal device triggers power headroom reporting based on the path loss offset value, so that power headroom reporting can be performed in a UL only TRP scenario.

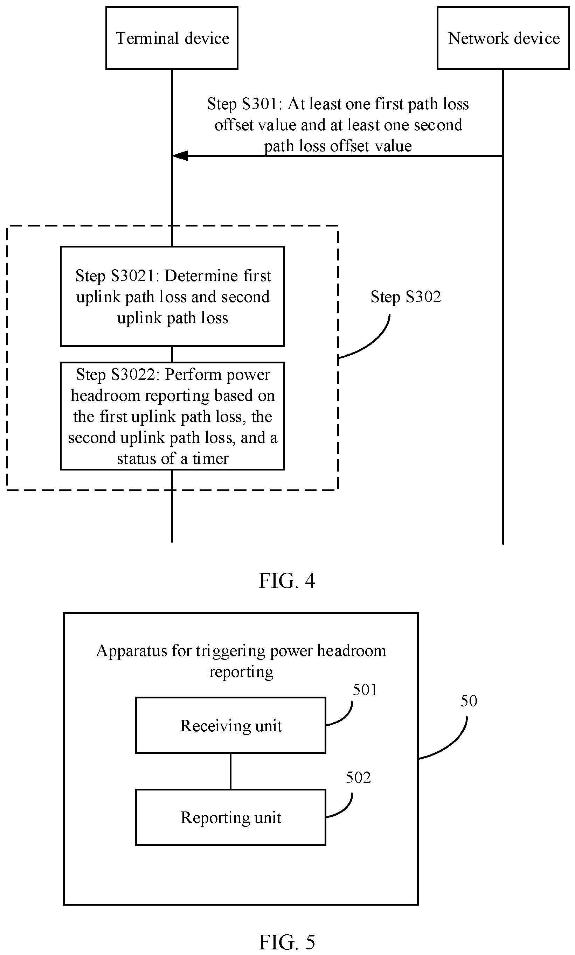

In a possible embodiment of this application, FIG. 4 shows another power headroom reporting method according to an embodiment of this application. Step S301 is the same as step S201 in the foregoing embodiment, and details are not described herein again. That the terminal device performs power headroom reporting based on the first path loss offset value and the second path loss offset value in step S302 includes the following steps.

Step S3021: The terminal device determines first uplink path loss and second uplink path loss.

For a specific implementation, refer to the foregoing embodiment. Details are not described herein again.

Step S3022: The terminal device performs power headroom reporting based on the first uplink path loss, the second uplink path loss, and a status of a timer.

The timer is a periodic timer (phr-Periodic-Timer).

In a possible embodiment of this application, the terminal device performs power headroom reporting when a variation between the first uplink path loss and the second uplink path loss is greater than a fourth preset threshold and the timer is in an expired state.

It can be understood that, based on the foregoing embodiment, the terminal device performs power headroom reporting when the timer is in the expired state. For a specific implementation, refer to the foregoing embodiment. Details are not described herein again.

Optionally, the method provided in this embodiment of this application further includes: The terminal device performs power headroom reporting when the variation between the first uplink path loss and the second uplink path loss is greater than or equal to the fourth preset threshold, the timer is in the expired state, and the first uplink path loss has been used for power headroom reporting.

It can be understood that, that the first uplink path loss has been used for power headroom reporting may be that the first uplink path loss has been used for latest power headroom reporting or has been used for previous power headroom reporting. This is not limited in this embodiment of this application.

In a possible embodiment of this application, when the terminal device does not receive the at least one second path loss offset value from the network device after receiving the at least one first path loss offset value, the method provided in this embodiment of this application includes: The terminal device performs power headroom reporting based on the status of the timer and a variation between first downlink path loss and second downlink path loss.

In an example, at a first moment, the terminal device receives the at least one first path loss offset value from the network device and measures the first downlink path loss; and at a second moment, the terminal device measures the second downlink path loss but does not receive the at least one second path loss offset value from the network device. In this case, the terminal device determines, based on the first downlink path loss, the second downlink path loss, and the status of the timer, whether to perform power headroom reporting.

In a possible implementation of this application, power headroom reporting is performed when the variation between the first downlink path loss and the second downlink path loss is greater than a fifth preset threshold and the timer is in the expired state.

For example, when the path loss offset value is a difference between downlink path loss and uplink path loss, at the first moment t0, the terminal device measures first downlink path loss ${PL}_{DL}^{{t}_{0}}$*,* and receives a first path loss offset value *Δ*^{*t*₀} from the network device. In this case, it is determined that the first uplink path loss is as follows: ${PL}_{UL}^{{t}_{0}} = {PL}_{DL}^{{t}_{0}} + {Δ}^{{t}_{0}}$*.* At the second moment t1, the terminal device measures second downlink path loss ${PL}_{DL}^{{t}_{1}}$*,* and receives no second path loss offset value from the network device. In this case, it is determined that the second uplink path loss is as follows: ${PL}_{UL}^{{t}_{1}} = {PL}_{DL}^{{t}_{0}} + {Δ}^{{t}_{0}}$*.* In this case, if a variation between the first downlink path loss ${PL}_{UL}^{{t}_{0}}$ and the second downlink path loss ${PL}_{UL}^{{t}_{1}}$ exceeds the second preset threshold and the timer (phr-Periodic-Timer) has expired or is in the expired state, the terminal device triggers power headroom reporting.

For example, when the path loss offset value is an offset coefficient between downlink path loss and uplink path loss, at the first moment t0, the terminal device measures first downlink path loss ${PL}_{DL}^{{t}_{0}}$*,* and receives a first path loss offset value *Δ*^{*t*₀} from the network device. In this case, it is determined that the first uplink path loss is as follows: ${PL}_{UL}^{{t}_{0}} = {PL}_{DL}^{{t}_{0}} ⋅ {Δ}^{{t}_{0}}$*.* At the second moment t1, the terminal device measures second downlink path loss ${PL}_{DL}^{{t}_{1}}$*,* and receives a second path loss offset value *Δ*^{*t*₁} from the network device. In this case, it is determined that the second uplink path loss is as follows: ${PL}_{UL}^{{t}_{1}} = {PL}_{DL}^{{t}_{1}} ⋅ {Δ}^{{t}_{1}}$*.* In this case, if a variation between the first downlink path loss ${PL}_{UL}^{{t}_{0}}$ and the second downlink path loss ${PL}_{UL}^{{t}_{1}}$ exceeds the second preset threshold and the timer (phr-Periodic-Timer) has expired or is in the expired state, the terminal device triggers power headroom reporting.

Optionally, the method provided in this embodiment of this application further includes: The terminal device performs power headroom reporting when the variation between the first downlink path loss and the second downlink path loss is greater than or equal to the fifth preset threshold, the timer is in the expired state, and the first downlink path loss has been used for power headroom reporting. That the first downlink path loss has been used for power headroom reporting may be that the first downlink path loss has been used for latest power headroom reporting or has been used for previous power headroom reporting. This is not limited in this embodiment of this application.

An embodiment of this application provides a method for triggering power headroom reporting. A network device sends at least one first path loss offset value and at least one second path loss offset value to a terminal device, where the at least one first path loss offset value and the at least one second path loss offset value are used to trigger power headroom reporting.

In a possible embodiment of this application, the method provided in this embodiment of this application includes: The network device sends one second path loss offset value to the terminal device after sending one first path loss offset value, and triggers the power headroom reporting when a variation between the first path loss offset value and the second path loss offset value is greater than or equal to a first preset threshold.

In a possible embodiment of this application, the method provided in this embodiment of this application includes: The network device receives the at least one second path loss offset value after sending one first path loss offset value to the terminal device, where the first path loss offset value and the at least one second path loss offset value are used to determine a third path loss offset value, and power headroom reporting is triggered when a variation between the first path loss offset value and the third path loss offset value is greater than or equal to a second preset threshold.

In a possible embodiment of this application, the method provided in this embodiment of this application includes: The network device sends the at least one second path loss offset value to the terminal device after sending the at least one first path loss offset value, where the at least one first path loss offset value is used to determine a fourth path loss offset value, the at least one second path loss offset value is used to determine a fifth path loss offset value, and power headroom reporting is triggered when a variation between the fourth path loss offset value and the fifth path loss offset value is greater than or equal to a third preset threshold.

FIG. 5 shows an apparatus 50 for triggering power headroom reporting according to an embodiment of this application. The apparatus 50 includes a receiving unit 501 and a reporting unit 502.

The receiving unit 501 is configured to receive at least one first path loss offset value and at least one second path loss offset value, where the at least one first path loss offset value and the at least one second path loss offset value are from a network device.

The reporting unit 502 is configured to perform power headroom reporting based on the at least one first path loss offset value and the at least one second path loss offset value.

In an embodiment of this application, when one second path loss offset value is received after one first path loss offset value is received, the reporting unit 502 is configured to perform power headroom reporting when a variation between the first path loss offset value and the second path loss offset value is greater than or equal to a first preset threshold.

In an embodiment of this application, when the at least one second path loss offset value is received after one first path loss offset value is received, the reporting unit 502 is configured to determine a third path loss offset value based on the first path loss offset value and the at least one second path loss offset value. The reporting unit 502 is further configured to perform power headroom reporting when a variation between the first path loss offset value and the third path loss offset value is greater than or equal to a second preset threshold.

In an embodiment of this application, when a plurality of second path loss offset values are received after a plurality of first path loss offset values are received, the reporting unit 502 is configured to determine a fourth path loss offset value based on the plurality of first path loss offset values, and determine a fifth path loss offset value based on the plurality of second path loss offset values. The reporting unit 502 is further configured to perform power headroom reporting when a variation between the fourth path loss offset value and the fifth path loss offset value is greater than or equal to a third preset threshold.

In an embodiment of this application, the reporting unit 502 is configured to perform power headroom reporting based on the at least one first path loss offset value, the at least one second path loss offset value, and a status of a counter.

In an embodiment of this application, the reporting unit 502 is configured to perform power headroom reporting when the variation between the first path loss offset value and the second path loss offset value is greater than or equal to the first preset threshold, or the variation between the first path loss offset value and the third path loss offset value is greater than or equal to the second preset threshold, or the variation between the fourth path loss offset value and the fifth path loss offset value is greater than or equal to the third preset threshold, and the timer is in an expired state.

In an embodiment of this application, the reporting unit 502 is further configured to determine first uplink path loss and second uplink path loss, where
the first uplink path loss is determined based on first downlink path loss and the first path loss offset value, and the second uplink path loss is determined based on second downlink path loss and the second path loss offset value, or is determined based on the first path loss offset value, the second downlink path loss, and the second path loss offset value.

The reporting unit 502 is further configured to perform power headroom reporting based on the first uplink path loss and the second uplink path loss.

In an embodiment of this application, the reporting unit 502 is configured to perform power headroom reporting when a variation between the first uplink path loss and the second uplink path loss is greater than a fourth preset threshold.

In an embodiment of this application, the first path loss offset value is received in a first time period, and the second path loss offset value is received in a second time period, where the first time period is before the second time period.

In a possible implementation, the first downlink path loss is obtained at a last time or within first preset time before the first time period; or the first downlink path loss is obtained at a most recent time or within second preset time after the first time period.

In a possible implementation, the second downlink path loss is obtained at a last time or within first preset time before the second time period; or the second downlink path loss is obtained at a most recent time or within second preset time after the second time period.

In an embodiment of this application, when no second path loss offset value is received from the network device after the first path loss offset value is received, the second uplink path loss is determined based on the first downlink path loss and the first path loss offset value.

In an embodiment of this application, when no second path loss offset value is received from the network device after the first path loss offset value is received, the reporting unit 502 does not perform power headroom reporting.

In an embodiment of this application, the reporting unit 502 is further configured to perform power headroom reporting based on a status of a timer and a variation between the first uplink path loss and the second uplink path loss.

In an embodiment of this application, the reporting unit 502 is configured to perform power headroom reporting when the variation between the first uplink path loss and the second uplink path loss is greater than a first preset threshold and the timer is in an expired state.

In an embodiment of this application, when the at least one second path loss offset value is not received from the network device after the at least one first path loss offset value is received, the reporting unit 502 is configured to perform power headroom reporting based on the status of the timer and a variation between the first downlink path loss and the second downlink path loss.

In an embodiment of this application, the reporting unit 502 is configured to perform power headroom reporting when the variation between the first downlink path loss and the second downlink path loss is greater than a second preset threshold and the timer is in the expired state.

In an embodiment of this application, the first path loss offset value is a difference or an offset coefficient between the first downlink path loss and the first uplink path loss, and the second path loss offset value is a difference or an offset coefficient between the second downlink path loss and the second uplink path loss.

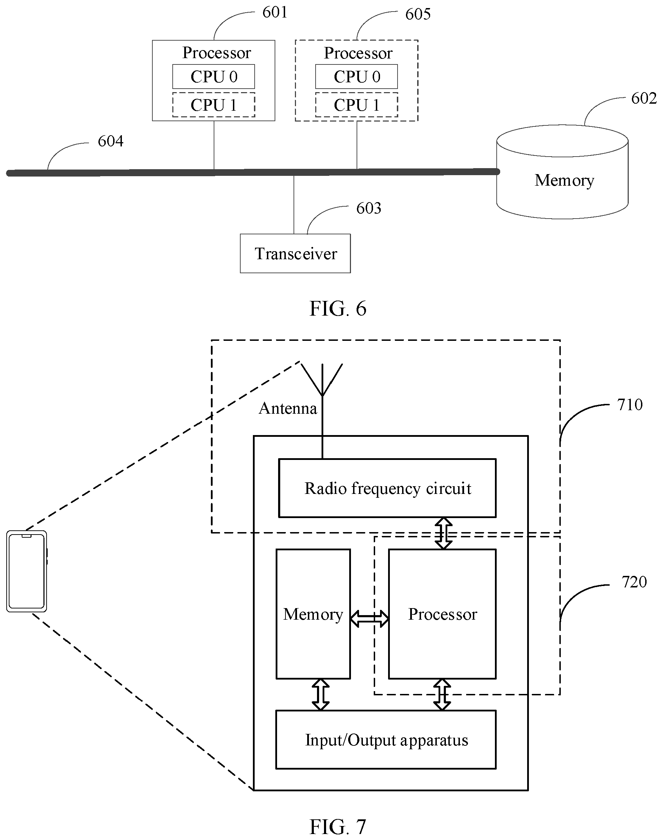

FIG. 6 is a diagram of a hardware structure of a communication device according to an embodiment of this application. For hardware structures of the terminal device and the network device in embodiments of this application, refer to the structure shown in FIG. 6. The communication device includes a processor 601, a communication line 604, and at least one transceiver (in FIG. 6, only an example in which a transceiver 603 is included is used for description).

The processor 601 may be a general-purpose central processing unit (central processing unit, CPU), a microprocessor, an application-specific integrated circuit (application-specific integrated circuit, ASIC), or one or more integrated circuits for controlling program execution for the solutions of this application.

The communication line 604 may include a path for transmitting information between the foregoing components.

The transceiver 603 is any apparatus like a transceiver, and is configured to communicate with another device or a communication network, for example, Ethernet, a radio access network (radio access network, RAN), or a wireless local area network (wireless local area network, WLAN).

Optionally, the communication device may further include a memory 602.

The memory 602 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of instructions or data structures and that is accessible to a computer, but is not limited thereto. The memory 602 may exist independently, and is connected to the processor 601 through the communication line 604. Alternatively, the memory 602 may be integrated with the processor 601.

The memory 602 is configured to store computer-executable instructions for performing the solutions of this application, and the processor 601 controls execution of the computer-executable instructions. The processor 601 is configured to execute the computer-executable instructions stored in the memory 602, to implement a policy control method provided in the following embodiments of this application.

Optionally, the computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication device may include a plurality of processors, for example, the processor 601 and a processor 605 in FIG. 6. Each of the processors may be a single-core processor (single-CPU) or a multi-core processor (multi-CPU). The processor herein may be one or more devices, circuits, and/or processing cores for processing data (for example, computer program instructions).

An embodiment of this application further provides a communication apparatus. The communication apparatus may be a terminal device or a chip. The communication apparatus may be configured to perform the foregoing method embodiments.

When the communication apparatus is a terminal device, FIG. 7 is a diagram of a simplified structure of the terminal device. For ease of understanding and illustration, an example in which the terminal device is a mobile phone is used in FIG. 7. As shown in FIG. 7, the terminal device includes a processor, a memory, a radio frequency circuit, an antenna, and an input/output apparatus. The processor is mainly configured to process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data. For ease of description, FIG. 7 shows only one memory and one processor. An actual terminal device product may include one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 7, the terminal device includes a transceiver unit 710 and a processing unit 720. The transceiver unit 710 may also be referred to as a transceiver, a transceiver device, a transceiver apparatus, or the like. The processing unit 720 may also be referred to as a processor, a processing board, a processing module, a processing apparatus, or the like. Optionally, a component for implementing a receiving function in the transceiver unit 710 may be considered as a receiving unit, and a component for implementing a sending function in the transceiver unit 710 may be considered as a sending unit. That is, the transceiver unit 710 includes the receiving unit and the sending unit. The transceiver unit may sometimes also be referred to as a transceiver device, a transceiver, a transceiver circuit, or the like. The receiving unit may sometimes also be referred to as a receiving device, a receiver, a receiver circuit, or the like. The sending unit may sometimes also be referred to as a transmitting device, a transmitter, a transmitter circuit, or the like.

For example, in an implementation, the processing unit 720 is configured to perform the foregoing method embodiments. The transceiver unit 710 is configured to perform related sending/receiving operations in the foregoing method embodiments. For example, the transceiver unit 710 is configured to send or receive a DFT-s-OFDM symbol or an SC-QAM symbol.

It should be understood that FIG. 7 is merely an example rather than a limitation, and the terminal device including the transceiver unit and the processing unit may not rely on the structure shown in FIG. 7.

When the communication apparatus is a chip, the chip includes a transceiver unit and a processing unit. The transceiver unit may be an input/output circuit or a communication interface. The processing unit may be a processor, a microprocessor, or an integrated circuit that is integrated in the chip.

An embodiment of this application further provides a communication apparatus. The communication apparatus may be a network device or a chip. The communication apparatus may be configured to perform the foregoing method embodiments. The communication apparatus is a network device, for example, a base station.

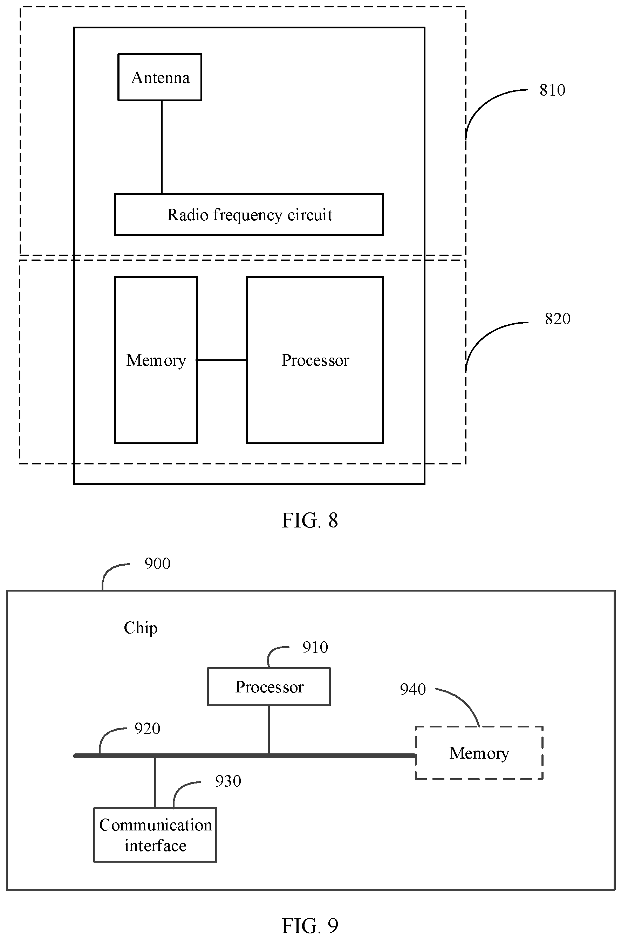

FIG. 8 is a diagram of a simplified structure of the base station. The base station includes a part 810 and a part 820. The part 810 is mainly configured to send/receive a radio frequency signal, and perform conversion between the radio frequency signal and a baseband signal. The part 820 is mainly configured to perform baseband processing, control the base station, and the like. The part 810 may be usually referred to as a transceiver unit, a transceiver device, a transceiver circuit, a transceiver, or the like. The part 820 is usually a control center of the base station, may be usually referred to as a processing unit, and is configured to control the base station to perform a processing operation on the network device side in the foregoing method embodiments.

The transceiver unit in the part 810 may also be referred to as a transceiver device, a transceiver, or the like, and includes an antenna and a radio frequency unit. The radio frequency unit is mainly configured to perform radio frequency processing. Optionally, a component for implementing a receiving function in the part 810 may be considered as a receiving unit, and a component for implementing a sending function may be considered as a sending unit. That is, the part 810 includes the receiving unit and the sending unit. The receiving unit may also be referred to as a receiving device, a receiver, a receiver circuit, or the like. The sending unit may be referred to as a transmitting device, a transmitter, a transmitter circuit, or the like.

The part 820 may include one or more boards, and each board may include one or more processors and one or more memories. The processor is configured to read and execute a program in the memory, to implement a baseband processing function and control the base station. If there are a plurality of boards, the boards may be connected to each other to enhance a processing capability. In an optional implementation, a plurality of boards may share one or more processors, or a plurality of boards share one or more memories, or a plurality of boards share one or more processors at the same time.

For example, in an implementation, the part 820 is configured to perform the foregoing method embodiments. The part 810 is configured to perform related sending/receiving operations in the foregoing method embodiments. For example, the part 810 is configured to send or receive a DFT-s-OFDM symbol or an SC-QAM symbol.

It should be understood that FIG. 8 is merely an example rather than a limitation, and the network device including the transceiver unit and the processing unit may not rely on the structure shown in FIG. 8.

FIG. 9 is a diagram of a structure of a chip 900 according to an embodiment of this application. The chip 900 includes one or more (including two) processors 910 and a communication interface 930.

Optionally, the chip 900 further includes a memory 940. The memory 940 may include a read-only memory and a random access memory, and provide an operation instruction and data for the processor 910. A part of the memory 940 may further include a non-volatile random access memory (non-volatile random access memory, NVRAM).

In some implementations, the memory 940 stores the following elements: an executable module or a data structure, or a subset thereof, or an extended set thereof.

In this embodiment of this application, a corresponding operation is performed by invoking the operation instruction (the operation instruction may be stored in an operating system) stored in the memory 940.

The processor 910 controls a processing operation of either of a first terminal and a base station, and the processor 910 may also be referred to as a central processing unit (central processing unit, CPU).

The memory 940 may include a read-only memory and a random access memory, and provide instructions and data for the processor 910. A part of the memory 940 may further include an NVRAM. For example, during application, the memory 940, the communication interface 930, and the memory 940 are coupled together through a bus system 920. In addition to a data bus, the bus system 920 may further include a power bus, a control bus, a status signal bus, and the like. However, for clarity of description, various buses are marked as the bus system 920 in FIG. 9.

The methods disclosed in the foregoing embodiments of this application may be applied to the processor 910 or implemented by the processor 910. The processor 910 may be an integrated circuit chip with a signal processing capability. During implementation, the steps of the foregoing method may be performed by a hardware integrated logic circuit in the processor 910 or by instructions in a form of software. The processor 910 may be a general-purpose processor, a digital signal processor (digital signal processor, DSP), an ASIC, a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 940, and the processor 910 reads information in the memory 940 and performs the steps of the foregoing methods in combination with hardware of the processor 910.

The communication unit may be a communication interface of the apparatus, and is configured to receive a signal from another apparatus. For example, when the apparatus is implemented as a chip, the communication unit is a communication interface used by the chip to receive a signal from another chip or apparatus or send a signal.

An embodiment of this application further provides a computer-readable storage medium. The computer-readable storage medium stores a computer program. When the computer program is executed by a computer, the computer is enabled to implement the foregoing method embodiments.

An embodiment of this application further provides a computer program product including instructions. When the instructions are executed by a computer, the computer is enabled to implement the foregoing method embodiments.

For descriptions and beneficial effects of related content of any one of the communication apparatuses provided above, refer to corresponding method embodiments provided above. Details are not described herein again.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing the method provided in embodiments of this application is not particularly limited in embodiments of this application, provided that the entity can run a program that records code of the method provided in embodiments of this application to perform communication according to the method provided in embodiments of this application. For example, the method provided in embodiments of this application may be performed by a terminal device or a network device or by a functional module that is in a terminal device or a network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable device, carrier, or medium. For example, the computer-readable medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry instructions and/or data.

It should be understood that the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and serves as an external cache. By way of example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate, a transistor logic device, or a discrete hardware component, a memory (a storage module) is integrated into the processor.

It should be noted that the memory described in this specification is intended to include but is not limited to these memories and any other appropriate type of memory.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions in embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for triggering power headroom reporting, wherein the method comprises:
receiving at least one first path loss offset value and at least one second path loss offset value, wherein the at least one first path loss offset value and the at least one second path loss offset value are from a network device; and
performing power headroom reporting based on the at least one first path loss offset value and the at least one second path loss offset value.

2. The method according to claim 1, wherein when one second path loss offset value is received after one first path loss offset value is received, performing power headroom reporting based on the at least one first path loss offset value and the at least one second path loss offset value comprises:
performing power headroom reporting when a variation between the first path loss offset value and the second path loss offset value is greater than or equal to a first preset threshold.

3. The method according to claim 2, wherein the method further comprises:
performing power headroom reporting when the variation between the first path loss offset value and the second path loss offset value is greater than or equal to the first preset threshold and the first path loss offset value has been used for power headroom reporting.

4. The method according to claim 1, wherein when the at least one second path loss offset value is received after one first path loss offset value is received, performing power headroom reporting based on the at least one first path loss offset value and the at least one second path loss offset value comprises:
determining a third path loss offset value based on the first path loss offset value and the at least one second path loss offset value; and
performing power headroom reporting when a variation between the first path loss offset value and the third path loss offset value is greater than or equal to a second preset threshold.

5. The method according to claim 1, wherein when a plurality of second path loss offset values are received after a plurality of first path loss offset values are received, performing power headroom reporting based on the at least one first path loss offset value and the at least one second path loss offset value comprises:
determining a fourth path loss offset value based on the plurality of first path loss offset values;
determining a fifth path loss offset value based on the plurality of second path loss offset values; and
performing power headroom reporting when a variation between the fourth path loss offset value and the fifth path loss offset value is greater than or equal to a third preset threshold.

6. The method according to any one of claims 1 to 5, wherein the method comprises:
performing power headroom reporting based on the at least one first path loss offset value, the at least one second path loss offset value, and a status of a counter.

7. The method according to claim 6, wherein the method comprises:
performing power headroom reporting when the variation between the first path loss offset value and the second path loss offset value is greater than or equal to the first preset threshold, or the variation between the first path loss offset value and the third path loss offset value is greater than or equal to the second preset threshold, or the variation between the fourth path loss offset value and the fifth path loss offset value is greater than or equal to the third preset threshold, and the timer is in an expired state.

8. The method according to claim 2, 3, or 7, wherein the method comprises:
performing power headroom reporting when the variation between the first path loss offset value and the second path loss offset value is greater than or equal to the first preset threshold, the timer is in the expired state, and the first path loss offset value has been used for power headroom reporting.

9. The method according to any one of claims 1 to 5, wherein performing power headroom reporting based on the at least one first path loss offset value and the at least one second path loss offset value comprises:
determining first uplink path loss and second uplink path loss, wherein the first uplink path loss is determined based on first downlink path loss and the at least one first path loss offset value, and the second uplink path loss is determined based on second downlink path loss and the at least one second path loss offset value, or is determined based on the at least one first path loss offset value, the second downlink path loss, and the at least one second path loss offset value; and
performing power headroom reporting based on the first uplink path loss and the second uplink path loss.

10. The method according to claim 9, wherein performing power headroom reporting based on the first uplink path loss and the second uplink path loss comprises:
performing power headroom reporting when a variation between the first uplink path loss and the second uplink path loss is greater than or equal to a fourth preset threshold.

11. The method according to claim 10, wherein the method further comprises:
performing power headroom reporting when the variation between the first uplink path loss and the second uplink path loss is greater than or equal to the fourth preset threshold and the first uplink path loss has been used for the power headroom reporting.

12. The method according to any one of claims 1 to 8, wherein the at least one first path loss offset value is received in a first time period, and the at least one second path loss offset value is received in a second time period, wherein the first time period is before the second time period.

13. The method according to claim 12, wherein first downlink path loss is obtained at a last time or within first preset time before the first time period; or
first downlink path loss is obtained at a most recent time or within second preset time after the first time period.

14. The method according to claim 12, wherein second downlink path loss is obtained at a last time or within first preset time before the second time period; or
second downlink path loss is obtained at a most recent time or within second preset time after the second time period.

15. The method according to any one of claims 9 to 11, wherein when the at least one second path loss offset value is not received from the network device after the at least one first path loss offset value is received, the second uplink path loss is determined based on the first downlink path loss and the at least one first path loss offset value.

16. The method according to claim 15, wherein when the at least one second path loss offset value is not received from the network device after the at least one first path loss offset value is received, no power headroom reporting is performed.

17. The method according to claim 9, wherein the method further comprises:
performing power headroom reporting based on a status of a timer and a variation between the first uplink path loss and the second uplink path loss.

18. The method according to claim 17, wherein the method comprises:
performing power headroom reporting when the variation between the first uplink path loss and the second uplink path loss is greater than or equal to a fourth preset threshold and the timer is in an expired state.

19. The method according to claim 18, wherein the method comprises:
performing power headroom reporting when the variation between the first uplink path loss and the second uplink path loss is greater than or equal to the fourth preset threshold, the timer is in the expired state, and the first uplink path loss has been used for power headroom reporting.

20. The method according to any one of claims 17 to 19, wherein when the at least one second path loss offset value is not received from the network device after the at least one first path loss offset value is received, the method comprises:
performing power headroom reporting based on the status of the timer and a variation between the first downlink path loss and the second downlink path loss.

21. The method according to claim 20, wherein the method comprises:
performing power headroom reporting when the variation between the first downlink path loss and the second downlink path loss is greater than or equal to a fifth preset threshold and the timer is in the expired state.

22. The method according to claim 21, wherein the method comprises:
performing power headroom reporting when the variation between the first downlink path loss and the second downlink path loss is greater than or equal to the fifth preset threshold, the timer is in the expired state, and the first downlink path loss has been used for the power headroom reporting.

23. The method according to any one of claims 1 to 22, wherein the first path loss offset value is a difference or an offset coefficient between the first downlink path loss and the first uplink path loss, and the second path loss offset value is a difference or an offset coefficient between the second downlink path loss and the second uplink path loss.

24. A method for triggering power headroom reporting, wherein the method comprises:
sending at least one first path loss offset value and at least one second path loss offset value to a terminal device, wherein the at least one first path loss offset value and the at least one second path loss offset value are used to trigger power headroom reporting.

25. The method according to claim 24, wherein the method comprises:
sending one second path loss offset value to the terminal device after sending one first path loss offset value, and triggering the power headroom reporting when a variation between the first path loss offset value and the second path loss offset value is greater than or equal to a first preset threshold.

26. The method according to claim 24, wherein the method comprises:
sending the at least one second path loss offset value to the terminal device after sending one first path loss offset value, wherein the first path loss offset value and the at least one second path loss offset value are used to determine a third path loss offset value; and
triggering the power headroom reporting when a variation between the first path loss offset value and the third path loss offset value is greater than or equal to a second preset threshold.

27. The method according to claim 24, wherein the method comprises:
sending the at least one second path loss offset value to the terminal device after sending the at least one first path loss offset value, wherein the at least one first path loss offset value is used to determine a fourth path loss offset value, and the at least one second path loss offset value is used to determine a fifth path loss offset value; and
triggering the power headroom reporting when a variation between the fourth path loss offset value and the fifth path loss offset value is greater than or equal to a third preset threshold.

28. A terminal device, wherein the terminal device comprises a memory and a processor, the memory is configured to store instructions, the processor is configured to execute the instructions stored in the memory, and the execution of the instructions stored in the memory enables the processor to perform the method according to any one of claims 1 to 23 or perform the method according to any one of claims 24 to 27.

29. A chip, wherein the chip comprises at least one processor and a communication interface, the communication interface is coupled to the at least one processor, the at least one processor is configured to run a computer program or instructions to implement the method according to any one of claims 1 to 23 or implement the method according to any one of claims 24 to 27, and the communication interface is configured to communicate with another module outside the chip.

30. A computer-readable storage medium, wherein the computer-readable storage medium stores instructions, and when the instructions are run, the method according to any one of claims 1 to 23 is implemented, or the method according to any one of claims 24 to 27 is implemented.
